(19) Europäisches Patentamt
European Patent Office
Office européen des brevets

(11) EP 4 279 527 A1

(12) EUROPEAN PATENT APPLICATION

(43) Date of publication:
**22.11.2023 Bulletin 2023/47**

(21) Application number: **23174263.6**

(22) Date of filing: **19.05.2023**

(51) International Patent Classification (IPC):
***C08G 63/183*** *(2006.01)*

(52) Cooperative Patent Classification (CPC):
(C-Sets available)
**C08G 63/183; C08G 63/20; C08G 63/78; C08L 67/02** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.05.2022 KR 20220062444**
**21.05.2022 KR 20220062446**

(71) Applicant: **Ecovance Co. Ltd**
**Suwon-si, Gyeonggi-do 16338 (KR)**

(72) Inventors:
- **KIM, Seong Dong**
**16338 Suwon-si, Gyeonggi-do (KR)**
- **KIM, Kyung Youn**
**16338 Suwon-si, Gyeonggi-do (KR)**
- **KIM, Hoon**
**16338 Suwon-si, Gyeonggi-do (KR)**
- **BYEON, Jun Su**
**16338 Suwon-si, Gyeonggi-do (KR)**
- **JOENG, Eun Sun**
**16338 Suwon-si, Gyeonggi-do (KR)**

(74) Representative: **Isarpatent**
**Patent- und Rechtsanwälte Barth**
**Charles Hassa Peckmann & Partner mbB**
**Friedrichstrasse 31**
**80801 München (DE)**

# (54) BIODEGRADABLE POLYESTER RESIN COMPOSITION

(57) A biodegradable molded article which includes a polyester resin including a diol, an aromatic dicarboxylic acid and an aliphatic dicarboxylic acid and has a wet hardness reduction rate of 12% to 25%.



Processed by Luminess, 75001 PARIS (FR)

(Cont. next page)

(52) Cooperative Patent Classification (CPC): (Cont.)

C-Sets
**C08L 67/02, C08L 1/02**

## Description

BACKGROUND OF THE INVENTION

### 1. Field of the Invention

Embodiments relate to a biodegradable molded article, a biodegradable polyester resin composition and a biodegradable polyester film including the same.

### 2. Description of Related Art

Recently, a solution to the handling various household items, especially disposable products, is required as concerns about environmental problems increase. Specifically, polymeric materials are inexpensive and have excellent processability properties, so they are widely used to manufacture various products such as films, fibers, packaging materials, bottles, containers, etc. However, polymer materials have the disadvantage that harmful substances are emitted when incinerated when the lifespan of a product is over, and it takes hundreds of years depending on the types thereof to completely decompose them naturally.

To address this concern, research on biodegradable polymers that are decomposed within a short period of time is being actively conducted. As examples of biodegradable polymers, polylactic acid (PLA), polybutyleneadipate terephthalate (PBAT), polybutylene succinate (PBS), and the like are being used.

Such biodegradable resin compositions are described in Korean Patent Application No. 2012-0103158, and the like.

SUMMARY OF THE INVENTION

Therefore, the present disclosure has been made in view of the above concerns, and one attribute of the present disclosure provides a biodegradable molded article having improved marine biodegradability and appropriate hydrolysis resistance, whereby a biodegradable polyester resin composition and a biodegradable polyester film including the same are provided.

In accordance with one aspect of the present disclosure, the above and other attributes can be accomplished by the provision of a biodegradable molded article, including a diol, an aromatic dicarboxylic acid and an aliphatic dicarboxylic acid, wherein a wet hardness reduction rate is 12% to 25%, wherein the wet hardness reduction rate is measured by a measurement method below:

[Measurement method]

the biodegradable molded article is processed into a polyester block having a thickness of 2.5 mm, an initial hardness of the polyester block and a wet hardness of the polyester block after immersing in 30°C water for 1 hour are measured, and the wet hardness reduction rate is obtained by dividing a difference between the initial hardness and the wet hardness by the initial hardness.

The biodegradable molded article according to one embodiment may further include a metal salt.

The biodegradable molded article according to one embodiment may further include an ester polyol.

In accordance with another aspect of the present disclosure, there is provided a biodegradable polyester resin composition, including: a polyester resin including a diol, an aromatic dicarboxylic acid and an aliphatic dicarboxylic acid, wherein a wet hardness reduction rate is 12% to 25%, the wet hardness reduction rate is measured by a measurement method below:

[Measurement method]

In this measurement method, the biodegradable polyester resin composition is molded to manufacture a polyester block having a thickness of 2.5 mm, an initial hardness of the polyester block and a wet hardness of the polyester block after immersing in 30°C water for 1 hour are measured, and the wet hardness reduction rate is obtained by dividing a difference between the initial hardness and the wet hardness by the initial hardness.

In one embodiment, the initial hardness may have a Shore D hardness of 30 to 45, and the wet hardness may have a Shore D hardness of 25 to 40.

In one embodiment, the wet hardness reduction rate may be 13% to 22%.

In the biodegradable polyester resin composition according to one embodiment, a content of nitrogen may be 0.1 ppm to 500 ppm.

In one embodiment, a water contact angle of a surface of the polyester block may be 65° to 90°.
In one embodiment, a polarity of the surface of the polyester block may be 4 mN/m to 7 mN/m.
In one embodiment, in the polyester resin, a ratio of a diol, bonded between the aromatic dicarboxylic acid and the aliphatic dicarboxylic acid, among the diol may be 0.3 to 0.7.
In one embodiment, a ratio of a diol, bonded between the aromatic dicarboxylic acid and the aromatic dicarboxylic acid, among the diol may be 0.2 to 0.3.
In the biodegradable polyester resin composition according to one embodiment, a hydrolysis degree after one week may be 35% to 60%, and a hydrolysis degree after three weeks may be 85% or more, wherein the hydrolysis degree after one week and the hydrolysis degree after three weeks are measured by a measurement method below:

[Measurement method]

the hydrolysis degree after one week is a molecular weight reduction rate, compared to an initial hydrolysis degree, of the biodegradable polyester resin allowed to stand for one week under high-temperature and high-humidity conditions of 80°C and 100% humidity, and the hydrolysis degree after three weeks is a molecular weight reduction rate, compared to an initial hydrolysis degree, of the biodegradable polyester resin allowed to stand for three weeks under high-temperature and high-humidity conditions of 80°C and 100% humidity.
In one embodiment, a difference between the wet hardness after being immersed in 30°C water for 1 hour and a wet hardness after being immersed in 30°C water for 20 hours may be 10% or less based on the initial hardness.
In one embodiment, a difference between the wet hardness after being immersed in 30°C water for 1 hour and a wet hardness after being immersed in 70°C water for 1 hour may be 10% or less based on the initial hardness.
In accordance with yet another aspect of the present disclosure, there is provided a biodegradable polyester resin composition, including: a polyester resin including a diol, an aromatic dicarboxylic acid and an aliphatic dicarboxylic acid, wherein a first weight swelling rate is 15% or less, and the first weight swelling rate is measured by a measurement method below:

[Measurement method]

the biodegradable polyester resin composition is dried at 80°C, placed in a stainless steel mold, and compressed at 210°C under a pressure of 10 MPa for 3 minutes to manufacture a polyester sheet having a thickness of 300 ,um, an initial weight of the polyester sheet and a weight of the polyester sheet after being immersed in acetone at room temperature for 24 hours are measured, and the first weight swelling rate is obtained by dividing a difference between the weight after immersion and the initial weight by the initial weight.
In the biodegradable polyester resin composition according to one embodiment, a first volume swelling rate may be 25% or less, wherein the first volume swelling rate is measured by a measurement method below:

[Measurement method]

an initial volume of the polyester sheet and a volume of the polyester sheet after being immersed in acetone at room temperature for 24 hours are measured, and the first volume swelling rate is obtained by dividing a difference between the volume after immersion and the initial volume by the initial volume.
In the biodegradable polyester resin composition according to one embodiment, a second weight swelling rate may be 20% or less, wherein the second weight swelling rate is measured by a measurement method below:

[Measurement method]

an initial weight of the polyester sheet and a weight of the polyester sheet after being immersed in acetonitrile at room temperature for 24 hours are measured, and the second weight swelling rate is obtained by dividing a difference between the weight after immersion and the initial weight by the initial weight.
In the biodegradable polyester resin composition according to one embodiment, a second volume swelling rate may be 25% or less, wherein the second volume swelling rate is measured by a measurement method below:

[Measurement method]

an initial volume of the polyester sheet and a volume of the polyester sheet after being immersed in acetonitrile at room temperature for 24 hours are measured, and the second volume swelling rate is obtained by dividing a difference between the volume after immersion and the initial volume by the initial volume.
The biodegradable polyester resin composition according to one embodiment may further include a polycaprolactone diol.

In the biodegradable polyester resin composition according to one embodiment, the weight swelling rate may be less than 12%.

BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a diagram schematically illustrating an apparatus for producing a polyester resin composition according to one embodiment; and
FIG. 2 illustrates a biodegradable molded article formed of a polyester resin composition according to one embodiment of the present disclosure.

DETAILED DESCRIPTION OF THE INVENTION

Hereinafter, the present disclosure will be described in more detail with reference to the following embodiments. The scope of the present disclosure is not limited to the following embodiments and covers modifications and equivalents of the technicological aspects disclosed herein.

In the specification, when a certain part "includes" a certain component, this indicates that the part may further include another component instead of excluding another component unless there is no different disclosure.

In addition, it should be understood that all numerical ranges representing physical property values, dimensions, etc. of components described in this specification are modified by the term 'about' in all cases unless otherwise specified, whereby 'about' represents standard deviations in the accuracy of the numerical ranges, defined herein as less than 2% of the values given (or the closest integral value when the range is expressed as a range of whole numbers). Futhermore, besides the disclosed ranges, the present disclosure includes any intervening ranges of those descrbed.

In this specification, terms such as first, second, primary, and secondary are used to describe various components, and the components are not limited by the terms. The terms are only used for the purpose of distinguishing one component from another.

In this specification, the term ppm is a unit based on mass. One ppm is 1 in 1 million of the total mass. That is, one ppm is 0.0001 wt% based on the total mass.

The biodegradable polyester resin composition according to one embodiment includes a biodegradable polyester resin. The biodegradable polyester resin composition according to one embodiment may include the biodegradable polyester resin alone or together with other resins or additives.

The biodegradable polyester resin includes a diol, an aromatic dicarboxylic acid and an aliphatic dicarboxylic acid. The biodegradable polyester resin may include a diol residue, an aromatic dicarboxylic acid residue and an aliphatic dicarboxylic acid residue. The diol residue can be derived from the diol, the aromatic dicarboxylic acid residue can be derived from the aromatic dicarboxylic acid, and the aliphatic dicarboxylic acid residue can be derived from the aliphatic dicarboxylic acid. The biodegradable polyester resin may include a diol component, an aromatic dicarboxylic acid component and an aliphatic dicarboxylic acid component. Likewise, the diol component may be derived from the diol, the aromatic dicarboxylic acid component may be derived from the aromatic dicarboxylic acid, and the aliphatic dicarboxylic acid component may be derived from the aliphatic dicarboxylic acid.

In a description of the biodegradable polyester resin composition according to one embodiment, a diol residue may be expressed as a diol. In the biodegradable polyester resin, a dicarboxylic acid residue may be expressed as dicarboxylic acid. In addition, the residue may be expressed as a component.

The diol may be an aliphatic diol. The diol may be a bio-derived diol. The diol may be at least one or more selected from the group consisting of ethanediol, 1,2-propanediol, 1,3-propanediol, 2-methyl-1,3-propanediol, 2,2-dimethyl-1,3-propanediol, 2,2-diethyl-1,3-propanediol, 2-ethyl-2-isobutyl-1,3-propanediol, 1,2-butanediol, 1,4-butanediol, 1,5-pentanediol, 3-methyl-1,5-pentanediol, 2,2,4-trimethyl-1,3-pentanediol, 1,6-hexanediol, 2-ethyl-1,3-hexanediol, 2,4-dimethyl-2-ethyl-1,3-hexanediol, 2,2,4-trimethyl-1,6-hexanediol, 2-methyl-1,8-octanediol, 1,9-nonanediol, 1,10-decanediol and 1,12-octadecanediol or derivatives thereof.

The diol may be at least one or more selected from the group consisting of 1,4-butanediol, 1,2-ethanediol, 1,3-propanediol, diethylene glycol and neopentyl glycol or derivatives thereof.

The diol may be at least one or more selected from the group consisting of 1,4-butanediol, 1,2-ethanediol, 1,3-propanediol or derivatives thereof.

The diol may include 1,4-butanediol or a derivative thereof.

The aromatic dicarboxylic acid may be at least one or more selected from the group consisting of phthalic acid, terephthalic acid, isophthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyl dicarboxylic acid, 4,4'-diphenyl ether dicarboxylic acid, anthracen dicarboxylic acid, and phenanthren dicarboxylic acid or derivatives thereof.

The aromatic dicarboxylic acid may be at least one or more selected from the group consisting of terephthalic acid, dimethyl terephthalate, 2,6-naphthalene dicarboxylic acid, isophthalic acid or derivatives thereof.

The aromatic dicarboxylic acid may include terephthalic acid, dimethyl terephthalate or a derivative thereof.

The aliphatic dicarboxylic acid may be at least one or more selected from the group consisting of oxalic acid, malonic acid, succinic acid, maleic acid, fumaric acid, glutaric acid, adipic acid, pimelic acid, serveric acid, azelaic acid, sebacic acid, dodecanedicarboxylic acid and 1,4-cyclohexanedicarboxylic acid or derivatives thereof.

The aliphatic dicarboxylic acid may be at least one or more selected from the group consisting of adipic acid, succinic acid and sebacic acid or derivatives thereof.

The aliphatic dicarboxylic acid may include an adipic acid or a derivative thereof.

In the biodegradable polyester resin, a molar ratio of all diol residues including the diol to all dicarboxylic acid residues including the aromatic dicarboxylic acid and the aliphatic dicarboxylic acid may range from about 1:0.9 to about 1:1.1. A molar ratio of all diol residues to all dicarboxylic acid residues may range from about 1:0.95 to about 1:1.05.

In the biodegradable polyester resin, a molar ratio of the aromatic dicarboxylic acid residue to the aliphatic dicarboxylic acid residue may range from about 3:7 to about 7:3. In the biodegradable polyester resin, a molar ratio of the aromatic dicarboxylic acid residue to the aliphatic dicarboxylic acid residue may range from about 3.3:6.7 to about 6.7:3.3. In the biodegradable polyester resin, a molar ratio of the aromatic dicarboxylic acid residue to the aliphatic dicarboxylic acid residue may range from about 4:6 to about 6:4. In the biodegradable polyester resin, a molar ratio of the aromatic dicarboxylic acid residue to the aliphatic dicarboxylic acid residue may range from about 4.2:5.8 to about 5:5.

The biodegradable polyester resin may include a diol residue derived from 1,4-butanediol in a content ranging from about 90 mol% or more based on the total diol. The biodegradable polyester resin may include a diol residue derived from 1,4-butanediol in a content ranging from about 95 mol% or more based on the total diol. The biodegradable polyester resin may include a diol residue derived from 1,4-butanediol in a content ranging from about 98 mol% or more based on the total diol.

The biodegradable polyester resin may include an aromatic dicarboxylic acid residue derived from terephthalic acid or dimethyl terephthalate in a content ranging from about 30 mol% to about 70 mol% based on the total dicarboxylic acid. The biodegradable polyester resin may include an aromatic dicarboxylic acid residue derived from terephthalic acid or dimethyl terephthalate in a content ranging from about 35 mol% to about 65 mol% based on the total dicarboxylic acid. The biodegradable polyester resin may include a dicarboxylic acid residue derived from terephthalic acid or dimethyl terephthalate in a content ranging from about 40 mol% to about 59 mol% based on the total dicarboxylic acid. The biodegradable polyester resin may include an aromatic dicarboxylic acid residue derived from terephthalic acid or dimethyl terephthalate in a content ranging from about 43 mol% to about 53 mol% based on the total dicarboxylic acid.

The biodegradable polyester resin may include an aliphatic dicarboxylic acid residue derived from adipic acid in a content ranging from about 30 mol% to about 70 mol% based on the total dicarboxylic acid. The biodegradable polyester resin may include an aliphatic dicarboxylic acid residue derived from adipic acid in a content ranging from about 35 mol% to about 65 mol% based on the total dicarboxylic acid. The biodegradable polyester resin may include an aliphatic dicarboxylic acid residue derived from adipic acid in a content ranging from about 41 mol% to about 60 mol% based on the total dicarboxylic acid. The biodegradable polyester resin may include an aliphatic dicarboxylic acid residue derived from adipic acid in a content ranging from about 47 mol% to about 57 mol% based on the total dicarboxylic acid.

In addition, the biodegradable polyester resin may include at least one first block and at least one second block. See for example the chemical blocks illustrated in formula (1), formula (2), formula (3), formula (4), and formula (5) below. The biodegradable polyester resin may have a molecular structure in which the first block and the second block are alternately bonded.

The first block may include the diol residue and the aromatic dicarboxylic acid residue. The first block may be formed by esterification of the diol and the aromatic dicarboxylic acid. The first block may include only the diol residue and the aromatic dicarboxylic acid residue. The first block may include only repeating units formed by the esterification of the diol and the aromatic dicarboxylic acid. That is, the first block may mean the sum of repeating units of the diol and the aromatic dicarboxylic acid before being combined with the aliphatic dicarboxylic acid.

The second block may include the diol residue and the aliphatic dicarboxylic acid residue. The second block may be formed by esterification of the diol and the aliphatic dicarboxylic acid. The second block may include only the diol residue and the aliphatic dicarboxylic acid residue. The second block may include only repeating units formed by the esterification of the diol and the aliphatic dicarboxylic acid. That is, the second block may mean the sum of repeating units of the diol and the aliphatic dicarboxylic acid before being combined with the aromatic dicarboxylic acid.

In the biodegradable polyester resin, a ratio (X/Y) of the number (X) of the first blocks to the number (Y) of the second blocks may range from about 0.5 to about 1.5. In the biodegradable polyester resin, the ratio (X/Y) of the number (X) of the first blocks to the number (Y) of the second blocks may range from about 0.6 to about 1.4. In the biodegradable polyester resin, the ratio (X/Y) of the number (X) of the first blocks to the number (Y) of the second blocks may range

from about 0.7 to about 1.3. In the biodegradable polyester resin, the ratio (X/Y) of the number (X) of the first blocks to the number (Y) of the second blocks may range from about 0.75 to about 1.2. In addition, in the biodegradable polyester resin, the ratio (X/Y) of the number (X) of the first blocks to the number (Y) of the second blocks may be 0.8 to 1. The number of the first blocks may be smaller than the number of the second blocks.

The number of the first blocks may range from about 30 to about 300. The number of the first blocks may range from about 40 to about 250. The number of the first blocks may range from about 50 to about 220. The number of the first blocks may range from about 60 to about 200. The number of the first blocks may range from about 70 to about 200. The number of the first blocks may range from about 75 to about 200.

The number of the first blocks may vary depending upon the content of the aromatic dicarboxylic acid, the molecular weight of the biodegradable polyester resin and an alternation ratio to be described below. That is, the number of the first blocks may increase as a molar ratio of the aromatic dicarboxylic acid increases, as the molecular weight of the biodegradable polyester resin increases, and as an alternation ratio to be described below increases.

The number of the second blocks may range from about 30 to about 300. The number of the second blocks may range from about 40 to about 250. The number of the second blocks may range from about 50 to about 220. The number of the second blocks may range from about 60 to about 200. The number of the second blocks may range from about 70 to about 200. The number of the second blocks may range from about 75 to about 200.

The number of the second blocks may vary depending upon the content of the aliphatic dicarboxylic acid, the molecular weight of the biodegradable polyester resin and an alternating degree to be described below. That is, the number of the first blocks may increase as the molecular weight of the biodegradable polyester resin increases, the molar ratio of the aliphatic dicarboxylic acid increases, and an alternating degree to be described below increases.

When the biodegradable polyester resin includes the first block and the second block within the range, the biodegradable polyester resin composition according to one embodiment may have an appropriate biodegradability while having an appropriate mechanical strength. See tables and examples below. In addition, when the biodegradable polyester resin includes the first block and the second block within the range, the biodegradable polyester resin composition according to another embodiment may have an increased stiffness while having greater flexibility. Accordingly, the biodegradable polyester resin composition according to this embodiment may be used for an injection-molded article, etc. In addition, when the biodegradable polyester resin includes the first block and the second block within the range, the biodegradable polyester resin composition according to this embodiment may have appropriate biodegradability while having appropriate durability to ultraviolet light, and the like.

The first block may be represented by Formula 1 below:

[Formula 1]

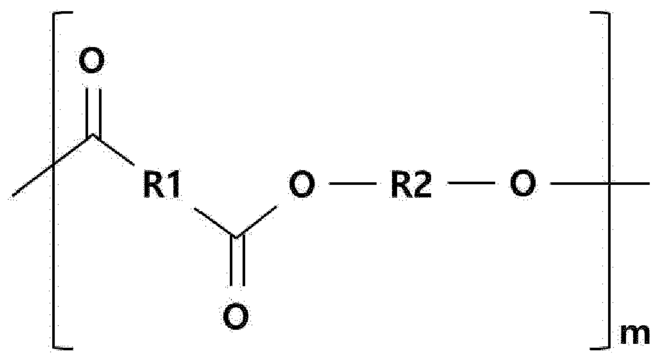

where R1 is a substituted or unsubstituted arylene group having 6 to 20 carbon atoms, R2 is a substituted or unsubstituted alkylene group having 1 to 20 carbon atoms, and m is 1 to 20.

R1 may be a substituted or unsubstituted phenylene group, and R2 may be a butylene group.

The second block may be represented by Formula 2 below:

[Formula 2]

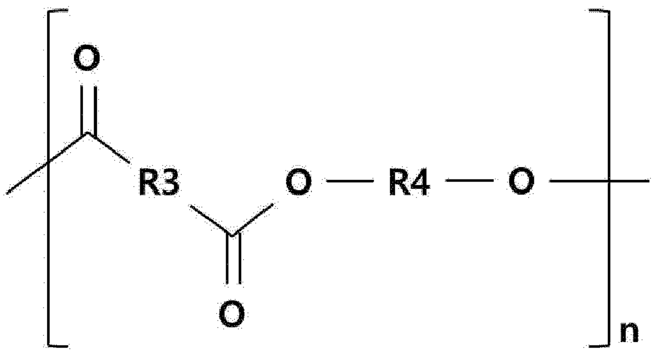

where R3 and R4 are each independently a substituted or unsubstituted alkylene group having 1 to 20 carbon atoms, and n is 1 to 20.

R3 and R4 may be a butylene group.

The biodegradable polyester resin may have a structure in which the first block and the second block are alternately bonded to each other. The biodegradable polyester resin may be represented by Formula 3 below.

[Formula 3]

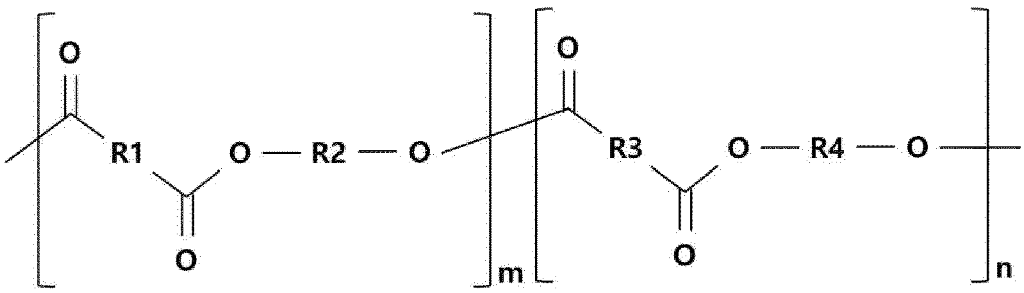

where R1 is a substituted or unsubstituted arylene group having 6 to 20 carbon atoms, R2 is a substituted or unsubstituted alkylene group having 1 to 20 carbon atoms, and m is 1 to 20. In addition, R3 and R4 are each independently a substituted or unsubstituted alkylene group having 1 to 20 carbon atoms, and n is 1 to 20.

The diol residue may include a residue of 1,4-butanediol or derivative thereof, the aromatic dicarboxylic acid residue may include a residue of terephthalic acid or derivative thereof, and the aliphatic dicarboxylic acid residue may include a residue of adipic acid or derivative thereof.

In one embodiment, the biodegradable polyester resin may include a first block including a residue of 1,4-butanediol or derivative thereof and a residue of terephthalic acid or derivative thereof.

Alternatively, the biodegradable polyester resin may include a first block including a residue of 1,4-butanediol or derivative thereof and a residue of dimethyl terephthalate or derivative thereof.

The biodegradable polyester resin may include a second block including a residue of 1,4-butanediol or derivative thereof and a residue of adipic acid or derivative thereof.

Alternatively, the biodegradable polyester resin may include a second block including a residue of 1,4-butanediol or derivative thereof and a residue of succinic acid or derivative thereof.

A biodegradable polyester resin according to one embodiment of the present disclosure may include a first block including a residue of 1,4-butanediol or derivative thereof and a residue of terephthalic acid or derivative thereof; and a second block including a residue of 1,4-butanediol or derivative thereof and a residue of adipic acid or derivative thereof.

The first block may be represented by Formula 4 below, and the second block may be represented by Formula 5 below:

[Formula 4]

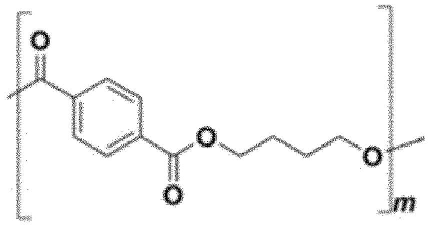

where m is 1 to 20.

[Formula 5]

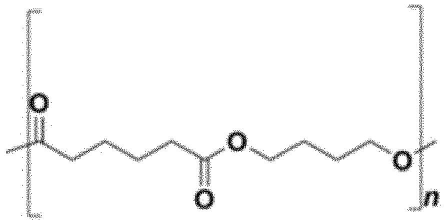

where n is 1 to 20.

In one embodiment, the biodegradable polyester resin may be represented by Formula 6 below:

[Formula 6]

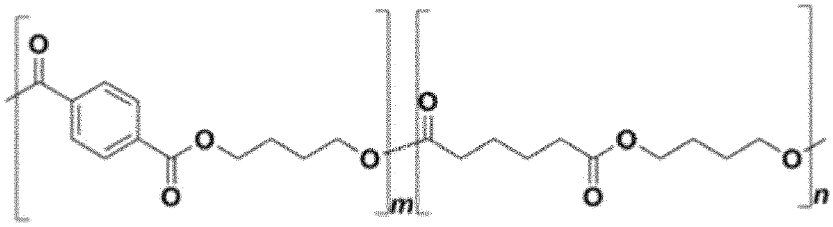

where m is 1 to 20, and n is 1 to 20.

When the first block and the second block satisfy the constitution above, a biodegradable polyester resin with these blocks may result ina biodegradable polyester sheet, film or molded article having excellent biodegradability and water degradability and improved properties. See tables and examples below.

In addition, when the biodegradable polyester resin includes the first block and the second block within the range, the biodegradable polyester resin composition according to one embodiment may have appropriate mechanical properties and appropriate UV resistance.

Since the first and second blocks have the characteristics, the mechanical properties of the biodegradable polyester resin composition according to one embodiment may be improved.

Since the first and second blocks have the characteristics, the biodegradable polyester resin composition according to one embodiment may have appropriate UV resistance.

Since the first and second blocks have these characteristics, the biodegradable polyester resin composition (according to a further embodiment) may have an appropriate hydrolysis rate. See tables and examples below.

Since the first and second blocks have the characteristics, the biodegradable polyester resin composition according to one embodiment may have an appropriate hydrolysis rate.

The biodegradable polyester resin may include the following bonding structures:

[Bonding Structure 1]
Aromatic dicarboxylic acid - diol - aliphatic dicarboxylic acid -
[Bonding Structure 2]
Aromatic dicarboxylic acid - diol - aromatic dicarboxylic acid -
[Bonding Structure 3]
Aliphatic dicarboxylic acid - diol - aliphatic dicarboxylic acid -

The diol included in Bonding Structure 1 is formed between the aromatic dicarboxylic acid and the aliphatic dicarboxylic acid and bonded to the aromatic dicarboxylic acid and the aliphatic dicarboxylic acid. The diol included in Bonding Structure 1 may be formed between the aromatic dicarboxylic acid and the aliphatic dicarboxylic acid and directly esterified with the aromatic dicarboxylic acid and the aliphatic dicarboxylic acid.
In addition, the diol included in Bonding Structure 2 is formed between the aromatic dicarboxylic acid and the aromatic dicarboxylic acid (that is formed between two aromatic dicarboxylic acid groups) and bonded to the two aromatic dicarboxylic acid groups. The diol included in Bonding Structure 2 may be formed between the aromatic dicarboxylic acid and the aromatic dicarboxylic acid and may be directly esterified with the aromatic dicarboxylic acid and the aromatic dicarboxylic acid.
In addition, the diol included in Bonding Structure 3 is formed between one aliphatic dicarboxylic acid and another aliphatic dicarboxylic acid (that is formed between two aliphatic dicarboxylic acid groups) and bonded to the aliphatic dicarboxylic acid and the aliphatic dicarboxylic acid (that is bonded between the two aliphatic dicarboxylic acid groups). The diol included in Bonding Structure 3 may be formed between the aliphatic dicarboxylic acid and the aliphatic dicarboxylic acid and may be directly esterified with the aliphatic dicarboxylic acid and the aliphatic dicarboxylic acid.
In one example of a biodegradable polyester resin, Bonding Structure 1 may be represented by Formula 7 below:

[Formula 7]

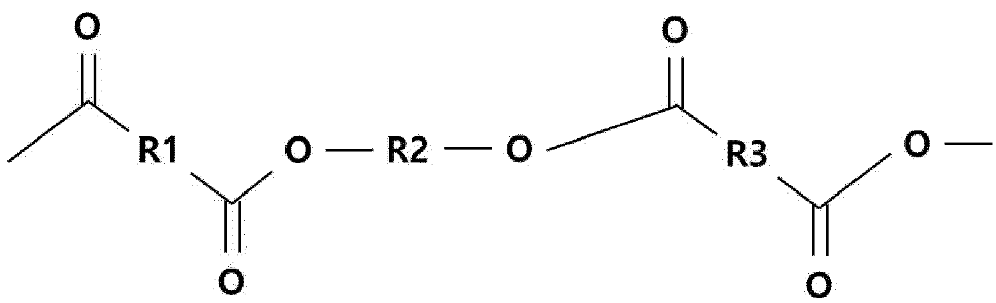

where R1 is a substituted or unsubstituted arylene group having 6 to 20 carbon atoms, R2 is a substituted or unsubstituted alkylene group having 1 to 20 carbon atoms, and R3 is a substituted or unsubstituted alkylene group having 1 to 20 carbon atoms.
In another example of a biodegradable polyester resin, Bonding Structure 2 may be represented by Formula 8 below:

[Formula 8]

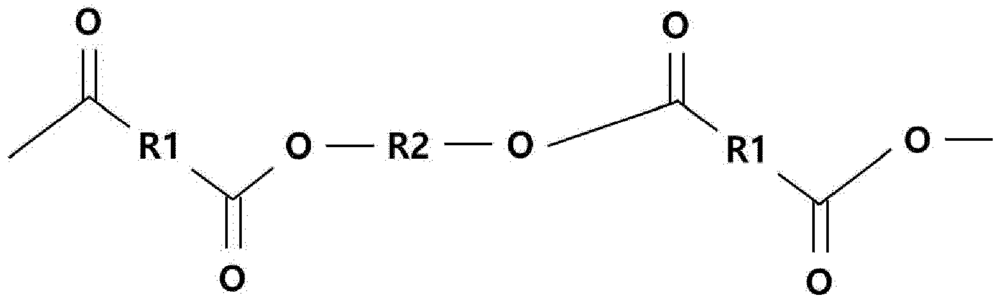

Likewise, R1 is a substituted or unsubstituted arylene group having 6 to 20 carbon atoms, and R2 is a substituted

or unsubstituted alkylene group having 1 to 20 carbon atoms.

In another example of a biodegradable polyester resin, Bonding Structure 3 may be represented by Formula 9 below:

[Formula 9]

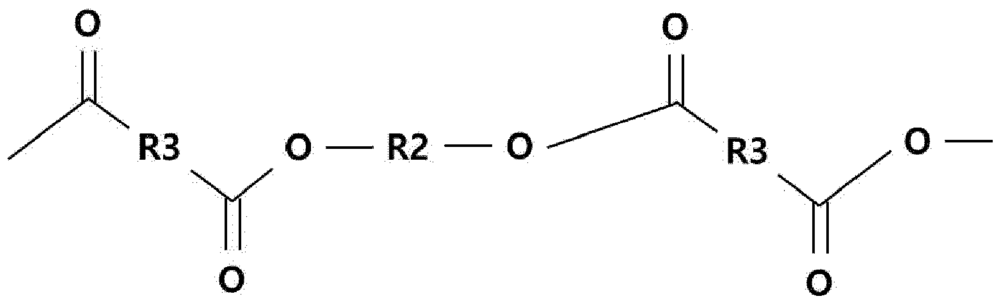

where R2 is a substituted or unsubstituted alkylene group having 1 to 20 carbon atoms, and R3 is a substituted or unsubstituted alkylene group having 1 to 20 carbon atoms.

In addition, Bonding Structure 1 may be represented by Formula 10 below:

[Formula 10]

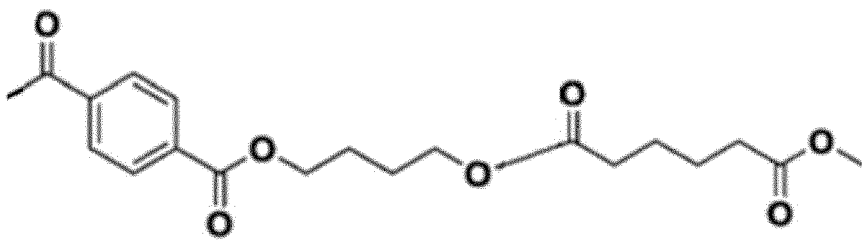

In addition, Bonding Structure 2 may be represented by Formula 11 below:

[Formula 11]

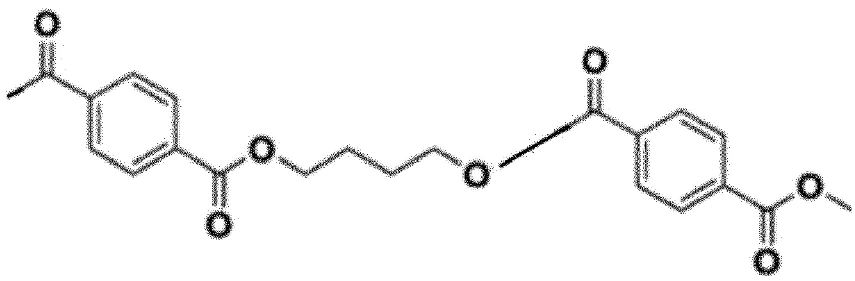

In addition, Bonding Structure 3 may be represented by Formula 12 below:

[Formula 12]

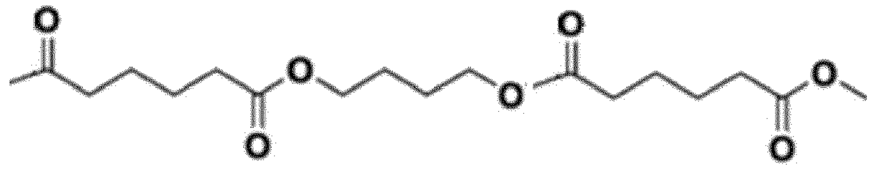

In one embodiment, the biodegradable polyester resin may have an alternating ratio.

The alternating ratio refers to a ratio of a diol bonded between the aromatic dicarboxylic acid and the aliphatic dicarboxylic acid among the diols. That is, the alternating ratio may be a ratio of a diol included in Bonding Structure 1 among the diols. The alternating ratio may be obtained by dividing the number of moles of a diol included in Bonding Structure 1 by the sum of a) the number of moles of a diol included in Bonding Structure 1, b) the number of moles of a diol included in Bonding Structure 2 and c) the number of moles of a diol included in Bonding Structure 3.

That is, the alternating ratio may be a ratio of a diol bonded between the heterogeneous dicarboxylic acids among the total diols.

The alternating ratio may be calculated according to Equation 1 below:

[Equation 1]

$$\text{Alternating ratio} = \frac{DM1}{DM1 + DM2 + DM3}$$

where DM1 is a molar ratio of a diol included in Bonding Structure 1, DM2 is a molar ratio of a diol included in Bonding Structure 2, and DM3 is a molar ratio of a diol included in Bonding Structure 3.

In one example of a biodegradable polyester resin, the alternating ratio may range from about 0.3 to about 0.7. In another example of a biodegradable polyester resin, the alternating ratio may range from about 0.37 to about 0.59. In still another example of a biodegradable polyester resin, the alternating ratio may range from about 0.4 to about 0.56. In yet another example of a biodegradable polyester resin, the alternating ratio may range from about 0.45 to about 0.53.

In addition, the biodegradable polyester resin may include a hard segment ratio.

The hard segment ratio refers to a ratio of a diol bonded between one aromatic dicarboxylic acid and another aromatic dicarboxylic acid among the diols (that is bonded between two aromatic dicarboxylic acid groups).

The hard segment ratio may be a molar ratio of a diol included in Bonding Structure 2 among the total diols. The hard segment ratio may be obtained by dividing the number of moles of a diol included in Bonding Structure 2 by the sum of a) the number of moles of a diol included in Bonding Structure 1, b) the number of moles of a diol included in Bonding Structure 2 and c) the number of moles of a diol included in Bonding Structure 3.

The hard segment ratio may be represented by Equation 2 below:

[Equation 2]

$$\text{Hard segment ratio} = \frac{DM2}{DM1 + DM2 + DM3}$$

where DM1 is a molar ratio of a diol included in Bonding Structure 1, DM2 is a molar ratio of a diol included in Bonding Structure 2, and DM3 is a molar ratio of a diol included in Bonding Structure 3.

The hard segment ratio may range from about 0.15 to about 0.35. The hard segment ratio may range from about 0.2 to about 0.3. The hard segment ratio may range from about 0.21 to about 0.29. The hard segment ratio may range from about 0.22 to about 0.28.

In addition, the biodegradable polyester resin composition may include soft segments.

A soft segment ratio refers to a ratio of a diol bonded between one aliphatic dicarboxylic acid and another aliphatic dicarboxylic acid among the diols (that is bonded between two aliphatic dicarboxylic acid groups).

The soft segment ratio may be a molar ratio of a diol included in Bonding Structure 3 among the total diols.

The soft segment ratio may be obtained by dividing the number of moles of a diol included in Bonding Structure 3 by the sum of a) the number of moles of a diol included in Bonding Structure 1, b) the number of moles of a diol included in Bonding Structure 2 and c) the number of moles of a diol included in Bonding Structure 3.

The soft segment ratio may be represented by Equation 3 below:

[Equation 3]

$$\text{Soft segment ratio} = \frac{DM3}{DM1 + DM2 + DM3}$$

where DM1 is a molar ratio of a diol included in Bonding Structure 1, DM2 is a molar ratio of a diol included in Bonding Structure 2, and DM3 is a molar ratio of a diol included in Bonding Structure 3.

The soft segment ratio may range from about 0.19 to about 0.29. The soft segment ratio may range from about 0.21 to about 0.29. The soft segment ratio may range from about 0.22 to about 0.29. The hard segment ratio may be about 0.21 to about 0.28. The soft segment ratio may range from about 0.22 to about 0.28. The soft segment ratio may range from about 0.25 to about 0.28.

The soft segment ratio may be larger than the hard segment ratio.

A ratio of the hard segments to the soft segments may range from about 0.92 to about 0.99. That is, according to Equation 2 and Equation 3, DM2 divided by DM3 may range from about 0.92 to about 0.99.

The alternating ratio, the hard segment ratio and the soft segment ratio may be measured by nuclear magnetic resonance spectroscopy. The biodegradable polyester resin composition according to one embodiment may be dissolved in a NMR solvent such as CDCl3, and may be analyzed by $^{1}H$-NMR and/or $^{13}C$-NMR analysis using a nuclear magnetic resonance (NMR) instrument at room temperature.

When the diol is 1,4-butanediol, the aromatic dicarboxylic acid is terephthalic acid or dimethyl terephthalate, and the aliphatic dicarboxylic acid is adipic acid, analysis of the biodegradable polyester resin by the nuclear magnetic resonance spectroscopy may include a first peak, a second peak, a third peak, a fourth peak, a fifth peak, a sixth peak, a seventh peak, an eighth peak, a ninth peak, a tenth peak, and an eleventh peak.

For example, when the diol is 1,4-butanediol, the aromatic dicarboxylic acid is terephthalic acid or dimethyl terephthalate, and the aliphatic dicarboxylic acid is adipic acid, analysis of the biodegradable polyester resin by the nuclear magnetic resonance spectroscopy may include a peak derived from the diol of Bonding Structure 1, a peak derived from the diol of Bonding Structure 2 and a peak derived from the diol of Bonding Structure 3 at about 3.5 ppm to about 4.6 ppm.

The - ppm direction may be an upfield direction or a shielded direction. For example, -3.4 ppm may mean a position of 3.4 ppm in an upfield direction. For example, -3.4 ppm may mean a position of 3.4 ppm in a shielded direction.

In a range of about 3.5 ppm to about 4.6 ppm, the first peak, the second peak, the third peak and the fourth peak may be defined in order from high ppm to low ppm. In addition, in a range of about -3.4 ppm to about -4.3 ppm based on the ppm of the ninth peak, the first peak, the second peak, the third peak and the fourth peak may be defined in order from high ppm to low ppm. Here, the first peak may be derived from the diol included in the second bonding unit, the second peak and the third peak may be derived from the diol included in the first bonding unit, and the fourth peak may be derived from the diol included in the third bonding unit.

In addition, analysis of the biodegradable polyester resin by the nuclear magnetic resonance spectroscopy may include a peak derived from the diol of Bonding Structure 1, a peak derived from the diol of Bonding Structure 2 and a peak derived from the diol of Bonding Structure 3 also at about 1.0 ppm to about 2.5 ppm.

In a range of about 1.0 ppm to about 2.5 ppm, the tenth peak, the fifth peak, the sixth peak, the seventh peak, the eighth peak and the eleventh peak may be defined in order from high ppm to low ppm. In a range of about -6.0 ppm to about - 6.7 ppm based on the ppm of the ninth peak, the fifth peak, the sixth peak, the seventh peak, the eighth peak and the eleventh peak may be defined in order from high ppm to low ppm. Here, the fifth peak may be derived from the diol included in the second bonding unit, the sixth peak and the seventh peak may be derived from the diol included in the first bonding unit, and the eighth peak may be derived from the diol included in the third bonding unit.

In addition, in a range of about 7.5 ppm to about 8.5 ppm, the ninth peak may be formed. The ninth peak may be derived from the aromatic dicarboxylic acid. The ninth peak may be derived from an aromatic ring included in the aromatic dicarboxylic acid. The ninth peak may be derived from an aromatic ring included in the terephthalic acid or the dimethyl terephthalate.

The tenth peak and the eleventh peak may be derived from the aliphatic dicarboxylic acid. The tenth peak and the eleventh peak may be derived from the adipic acid.

The first peak may be located at about -3.6 ppm to about -3.68 ppm based on the ppm of the ninth peak. The

second peak may be located at about -3.69 ppm to about -3.75 ppm based on the ppm of the ninth peak. The third peak may be located at about -3.9 ppm to about -3.97 ppm based on the ppm of the ninth peak. The fourth peak may be located at about -3.98 ppm to about -4.1 ppm based on the ppm of the ninth peak. The fifth peak may be located at about -6.0 ppm to about -6.19 ppm based on the ppm of the ninth peak. The sixth peak may be located at about -6.2 ppm to about -6.26 ppm based on the ppm of the ninth peak. The seventh peak may be located at about -6.27 ppm to about -6.34 ppm based on the ppm of the ninth peak. The eighth peak may be located at about -6.35 ppm to about -6.42 ppm based on the ppm of the ninth peak. The tenth peak may be located at about -5.6 ppm to about -5.8 ppm based on the ppm of the ninth peak. The eleventh peak may be located at about -6.421 ppm to about -6.5 ppm based on the ppm of the ninth peak. The position of the ninth peak based on ppm may be the position of each peak when the position of the ninth peak is 0 ppm.

In addition, the areas of the first peak, the second peak, the third peak, the fourth peak, the fifth peak, the sixth peak, the seventh peak, the eighth peak, the tenth peak and the eleventh peak may be normalized based on the area of the ninth peak. That is, when the area of the ninth peak is 1, the areas of the first peak, the second peak, the third peak, the fourth peak, the fifth peak, the sixth peak, the seventh peak, the eighth peak, the tenth peak and the eleventh peak may be relatively determined.

The alternating ratio may be derived by Equation 4 or 5 below:

[Equation 4]

$$\text{Alternating ratio} = \frac{PA2 + PA3}{PA1 + PA2 + PA3 + PA4}$$

where PA1 is the area of the first peak, PA2 is the area of the second peak, PA3 is the area of the third peak, and PA4 is the area of the fourth peak

[Equation 5]

$$\text{Alternating ratio} = \frac{PA6 + PA7}{PA5 + PA6 + PA7 + PA8}$$

where PA5 is the area of the fifth peak, PA6 is the area of the sixth peak, PA7 is the area of the seventh peak, and PA8 is the area of the eighth peak.

The hard segment ratio may be derived by Equation 6 or 7 below:

[Equation 6]

$$\text{Hard segment ratio} = \frac{PA1}{PA1 + PA2 + PA3 + PA4}$$

where PA1 is the area of the first peak, PA2 is the area of the second peak, PA3 is the area of the third peak, and PA4 is the area of the fourth peak.

[Equation 7]

$$\text{Hard segment ratio} = \frac{PA5}{PA5 + PA6 + PA7 + PA8}$$

where PA5 is the area of the fifth peak, PA6 is the area of the sixth peak, PA7 is the area of the seventh peak, and PA8 is the area of the eighth peak.

The soft segment ratio may be derived by Equation 8 or 9 below:

[Equation 8]

$$\text{Soft segment ratio} = \frac{PA4}{PA1 + PA2 + PA3 + PA4}$$

where PA1 is the area of the first peak, PA2 is the area of the second peak, PA3 is the area of the third peak, and PA4 is the area of the fourth peak.

[Equation 9]

$$\text{Soft segment ratio} = \frac{PA8}{PA5 + PA6 + PA7 + PA8}$$

where PA5 is the area of the fifth peak, PA6 is the area of the sixth peak, PA7 is the area of the seventh peak, and PA8 is the area of the eighth peak.

The area of the first peak may range from about 0.35 to about 0.6. The area of the first peak may range from about 0.4 to about 0.55. The area of the first peak may range from about 0.43 to about 0.5 The area of the first peak may range from about 0.43 to about 0.52. The area of the first peak may range from about 0.45 to about 0.49.

The area of the second peak may range from about 0.37 to about 0.57. The area of the second peak may range from about 0.41 to about 0.54. The area of the second peak may range from about 0.45 to about 0.53. The area of the second peak may range from about 0.45 to about 0.55. The area of the second peak may range from about 0.47 to about 0.53.

The area of the third peak may range from about 0.37 to about 0.57. The area of the third peak may range from about 0.41 to about 0.54. The area of the third peak may range from about 0.45 to about 0.53. The area of the third peak may range from about 0.45 to about 0.55. The area of the third peak may range from about 0.47 to about 0.53.

The area of the fourth peak may range from about 0.4 to 0.7. The area of the fourth peak may range from about 0.45 to about 0.65. The area of the fourth peak may range from about 0.48 to about 0.6. The area of the fourth peak may range from about 0.48 to 0.60. The area of the fourth peak may range from about 0.50 to about 0.58.

The area of the fifth peak may range from about 0.35 to about 0.6. The area of the fifth peak may range from about 0.4 to about 0.55. The area of the fifth peak may be 0.43 to about 0.53. The area of the fifth peak may range from about 0.43 to about 0.52. The area of the fifth peak may range from about 0.45 to about 0.49.

The area of the sixth peak may range from about 0.35 to about 0.6. The area of the sixth peak may range from about 0.4 to about 0.55. The area of the sixth peak may be 0.43 to about 0.5. The area of the sixth peak may range from about 0.45 to about 0.55. The area of the sixth peak may range from about 0.47 to about 0.53.

The area of the seventh peak may range from about 0.41 to about 0.71. The area of the seventh peak may range from about 0.45 to about 0.65. The area of the seventh peak may range from about 0.48 to about 0.6. The area of the seventh peak may range from about 0.45 to about 0.55. The area of the seventh peak may range from about 0.47 to about 0.53.

The area of the eighth peak may range from about 0.4 to about 0.7. The area of the eighth peak may range from about 0.45 to about 0.65. The area of the eighth peak may range from about 0.48 to about 0.6. The area of the eighth peak may range from about 0.48 to 0.60. The area of the eighth peak may range from about 0.50 to about 0.58.

The area of the tenth peak may range from about 0.7 to about 2.5. The area of the tenth peak may be 0.75 to about 2. The area of the tenth peak may be 0.8 to about 1.5. The area of the tenth peak may range from about 1.0 to about 1.15. The area of the tenth peak may range from about 1.02 to about 1.13.

The area of the eleventh peak may range from about 0.7 to about 3.5. The area of the eleventh peak may range from about 0.7 to about 3. The area of the eleventh peak may be 0.8 to about 2.5. The area of the eleventh peak may range from about 1.0 to about 1.15. The area of the eleventh peak may range from about 1.02 to about 1.13.

In addition, the sum of the area of the first peak, the area of the second peak, the area of the third peak and the area of the fourth peak may range from about 1.49 to about 2.44. The sum of the area of the first peak, the area of the second peak, the area of the third peak and the area of the fourth peak may range from about 1.81 to about 2.16. The sum of the area of the first peak, the area of the second peak, the area of the third peak and the area of the fourth peak may range from about 1.9 to about 2.2. The sum of the area of the first peak, the area of the second peak, the

area of the third peak and the area of the fourth peak may range from about 1.95 to about 2.1. Here, the sum of the area of the first peak, the area of the second peak, the area of the third peak and the area of the fourth peak may mean the sum of the total number of ester bonds based on the number of terephthalic acids.

The sum of the area of the second peak and the area of the third peak may range from about 0.95 to about 1.10. The sum of the area of the second peak and the area of the third peak may range from about 0.98 to about 1.07. Here, the sum of the area of the first peak and the area of the third peak may mean the degree of extension of molecular bonds of the biodegradable polyester resin.

A ratio (the area of the fourth peak/the area of the first peak) of the area of the fourth peak to the area of the first peak may range from about 1.1 to about 1.3. A ratio of the area of the fourth peak to the area of the first peak may range from about 0.67 to about 2.00. A ratio of the area of the fourth peak to the area of the first peak may range from about 0.96 to about 1.40. A ratio of the area of the fourth peak to the area of the first peak may range from about 1.15 to about 1.25. A ratio of the area of the fourth peak to the area of the first peak may mean a ratio of soft segments to hard segments in the molecular structure of the biodegradable polyester resin. That is, the biodegradable polyester resin becomes softer as the ratio of the area of the fourth peak to the area of the first peak increases.

A ratio (the area of the fourth peak/the area of the third peak) of the area of the fourth peak to the area of the third peak may range from about 0.7 to about 1.89. A ratio of the area of the fourth peak to the area of the third peak may range from about 0.91 to about 1.33. A ratio of the area of the fourth peak to the area of the third peak may range from about 1.0 to about 1.2. A ratio of the area of the fourth peak to the area of the third peak may range from about 1.01 to about 1.1.

A ratio (the area of the first peak/the area of the second peak) of the area of the first peak to the area of the second peak may range from about 0.61 to about 1.62. A ratio of the area of the first peak to the area of the second peak may range from about 0.81 to about 1.11. A ratio of the area of the first peak to the area of the second peak may range from about 0.85 to about 0.95. A ratio of the area of the first peak to the area of the second peak may range from about 0.86 to about 0.94.

In addition, a ratio (the area of the fifth peak/the area of the first peak) of the area of the fifth peak to the area of the first peak may range from about 0.61 to about 1.71. A ratio of the area of the fifth peak to the area of the first peak may range from about 0.96 to about 1.40. A ratio of the area of the fifth peak to the area of the first peak may range from about 0.8 to about 1.2. A ratio of the area of the fifth peak to the area of the first peak may range from about 0.9 to about 1.1.

In addition, a ratio (the area of the sixth peak/the area of the second peak) of the area of the sixth peak to the area of the second peak may range from about 0.58 to about 1.71. A ratio of the area of the sixth peak to the area of the first peak may range from about 0.86 to about 1.16. A ratio of the area of the sixth peak to the area of the first peak may range from about 0.8 to about 1.2. A ratio of the area of the sixth peak to the area of the first peak may range from about 0.9 to about 1.1.

In addition, a ratio (the area of the seventh peak/the area of the third peak) of the area of the seventh peak to the area of the third peak may range from about 0.72 to about 1.92. A ratio of the area of the seventh peak to the area of the third peak may range from about 0.91 to about 1.33. A ratio of the area of the seventh peak to the area of the third peak may range from about 0.8 to about 1.2. A ratio of the area of the seventh peak to the area of the third peak may range from about 0.9 to about 1.1.

In addition, a ratio (the area of the eighth peak/the area of the fourth peak) of the area of the eighth peak to the area of the fourth peak may range from about 0.59 to about 1.75. A ratio of the area of the eighth peak to the area of the fourth peak may range from about 0.80 to about 1.25. A ratio of the area of the eighth peak to the area of the fourth peak may range from about 0.8 to about 1.2. A ratio of the area of the eighth peak to the area of the fourth peak may range from about 0.9 to about 1.1.

Since the biodegradable polyester resin has the above-described molecular structure, the biodegradable polyester resin composition (according to one embodiment) may be more advantageous in providing a biodegradable polyester sheet, film or molded article having excellent biodegradability and water degradability and improved physical properties. See tables and examples herein.

In addition, since the biodegradable polyester resin has the above-described molecular structure, the biodegradable polyester resin composition (according to another embodiment) may have appropriate mechanical properties and appropriate UV resistance.

Since the biodegradable polyester resin has the above-described molecular structure, the biodegradable polyester resin composition (according to still another embodiment) may have appropriate UV resistance.

Since the first and second blocks have the above-noted characteristics, the biodegradable polyester resin composition (according to one embodiment) may have an appropriate biodegradation rate.

Since the first and second blocks have the characteristics, the biodegradable polyester resin composition according to one embodiment may have an appropriate biodegradation rate.

Since the biodegradable polyester resin has the above-described molecular structure, the biodegradable polyester resin composition according to one embodiment may have an appropriate hydrolysis rate.

The biodegradable polyester resin may further include a branching agent. The branching agent may include at least one or more selected from the group consisting of a trihydric or higher alcohol, an anhydride and a trihydric or higher carboxylic acid. The branching agent may react with the diol, the aromatic dicarboxylic acid and the aliphatic dicarboxylic acid. Accordingly, the branching agent may be included as a part of the molecular structure of the biodegradable polyester resin.

The trihydric or higher alcohol may be at least one or more selected from the group consisting of glycerol, pentaerythritol or trimethylolpropane.

The trihydric or higher carboxylic acid may be at least one or more selected from the group consisting of methane tricarboxylic acid, ethanetricarboxylic acid, citric acid, benzene-1,3,5-tricarboxylic acid, 5-sulfo-1,2,4-benzenetricarboxylic acid, ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid and benzene-1,2,4,5-tetracarboxylic acid.

The anhydride may include at least one or more selected from the group consisting of trimellitic anhydride, succinic anhydride, methylsuccinic anhydride, ethylsuccinic anhydride, 2,3-butanedicarboxylic anhydride, 2,4-pentanedicarboxylic anhydride, 3,5-heptanedicarboxylic anhydride, 1,2,3,4-butanetetracarboxylic dianhydride, maleic anhydride, dodecylsuccinic anhydride and pyromellitic anhydride.

The branching agent may be included in a content ranging from about 0.1 wt% to about 5 wt% in the biodegradable polyester resin based on the total amount of the biodegradable polyester resin. The branching agent may be included in a content ranging from about 0.1 wt% to about 3 wt% in the biodegradable polyester resin based on the total amount of the biodegradable polyester resin. The branching agent may be included in a content ranging from about 0.1 wt% to about 1 wt% in the biodegradable polyester resin based on the total amount of the biodegradable polyester resin.

Since the biodegradable polyester resin includes the branching agent within the range, the biodegradable polyester resin composition according to one embodiment may have appropriate mechanical characteristics and appropriate biodegradability.

The biodegradable polyester resin may further include an ester polyol. The ester polyol may be included in a molecular structure bonded to the biodegradable polyester resin.

The ester polyol may be prepared by a dehydration condensation reaction of a dibasic acid and a polyhydric alcohol. The dibasic acid may be at least one or more selected from the group consisting of adipic acid, isophthalic acid and sebacic acid. The polyhydric alcohol may be at least one or more selected from the group consisting of ethylene glycol, diethylene glycol, neopentyl glycol, 1,6-hexanediol and 1,2-propanediol.

the weight average molecular weight of the ester polyol may range from about 500 to about 5000. The weight average molecular weight of the ester polyol may range from about 700 to about 4000. The weight average molecular weight of the ester polyol may range from about 800 to about 3500.

In addition, the viscosity of the ester polyol may range from about 300 cps to about 20000 cps. The viscosity of the ester polyol may range from about 400 cps to about 15000 cps. The viscosity of the ester polyol may range from about 500 cps to about 14000 cps. The viscosity of the ester polyol may be Brookfield viscosity at about 25°C.

The OH value of the ester polyol may range from about 50 mgKOH/g to about 350 mgKOH/g. The OH value of the ester polyol may range from about 50 mgKOH/g to about 300 mgKOH/g.

The acid value of the ester polyol may range from about 3 mgKOH/g or less. The acid value of the ester polyol may range from about 2.5 mgKOH/g or less. The acid value of the ester polyol may range from about 2 mgKOH/g or less.

The ester polyol may be included in a content ranging from about 0.1 parts by weight to about 5 parts by weight in the biodegradable polyester resin based on 100 parts by weight of the biodegradable polyester resin. The ester polyol may be included in a content ranging from about 0.5 parts by weight to about 3 parts by weight in the biodegradable polyester resin based on 100 parts by weight of the biodegradable polyester resin. The ester polyol may be included in a content ranging from about 1 part by weight to about 3 parts by weight in the biodegradable polyester resin based on 100 parts by weight of the biodegradable polyester resin.

Since the ester polyol has the characteristics, the biodegradable polyester resin composition according to one embodiment may have appropriate wet hardness, appropriate mechanical properties, appropriate solvent resistance, appropriate hydrolysis and appropriate biodegradability.

The biodegradable polyester resin composition according to one embodiment may include the biodegradable resin in a content ranging from about 30 wt% or more based on the total weight of the composition. The biodegradable polyester resin composition according to one embodiment may include the biodegradable resin in a content ranging from about 50 wt% or more based on the total weight of the composition. The biodegradable polyester resin composition according to one embodiment may include the biodegradable resin in a content ranging from about 70 wt% or more based on the total weight of the composition. The biodegradable polyester resin composition according to one embodiment may include the biodegradable resin in a content ranging from about 80 wt% or more based on the total weight of the composition. The biodegradable polyester resin composition according to one embodiment may include the biodegradable resin in a content ranging from about 90 wt% or more based on the total weight of the composition. The biodegradable

polyester resin composition according to one embodiment may include the biodegradable resin in a content ranging from about 95 wt% or more based on the total weight of the composition. The biodegradable polyester resin composition according to one embodiment may include the biodegradable resin in a content ranging from about 99 wt% or more based on the total weight of the composition. A maximum content of the biodegradable resin in the biodegradable polyester resin composition according to one embodiment may range from about 100 wt% based on the total weight of the composition.

The biodegradable polyester resin composition according to one embodiment may further include a reinforcing material. The reinforcing material may improve the mechanical properties of the biodegradable polyester resin composition according to one embodiment and the mechanical properties of a film or molded article made of the composition. In addition, the reinforcing material may control the deformation characteristics of the biodegradable polyester resin composition according to one embodiment due to ultraviolet rays. In addition, the reinforcing material may control the hydrolysis characteristics of the biodegradable polyester resin composition according to one embodiment. In addition, the reinforcing material may control the biodegradability of the biodegradable polyester resin according to one embodiment.

The reinforcing material may be a fiber derived from biomass. The reinforcing material may be a fiber made of an organic material. The reinforcing material may be nanocellulose.

The nanocellulose may be one or more selected from the group consisting of nanocrystalline cellulose, cellulose nanofiber, micro fibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose and cyclohexyl cellulose.

The nanocellulose may include an ion-bonded metal. The nanocrystalline cellulose may include elemental sodium. In addition, the nanocrystalline cellulose may include sulphate. The nanocrystalline cellulose may include a carboxylate. The nanocrystalline cellulose may include a cellulose hydrogen sulphate sodium salt.

The nanocellulose may be represented by Formula 13 below:

[Formula 13] $$[(C_6H_{10}O_5)_xSO_3Na]_y$$

where x is 1 to 35, and y is 1 to 10. x may be 15 to 35, and y may be 1 to 10.

The specific surface area of the nanocellulose may range from about 200 $m^2/g$ to about 600 $m^2/g$. The specific surface area of the nanocellulose may range from about 250 $m^2/g$ to about 500 $m^2/g$.

The weight average molecular weight of the nanocellulose may range from about 10000 g/mol to about 40000 g/mol. The weight average molecular weight of the nanocrystalline cellulose may range from about 11000 g/mol to about 35000 g/mol.

The moisture content of the nanocrystalline cellulose may range from about 2 wt% to about 8 wt%. The moisture content of the nanocrystalline cellulose may range from about 4 wt% to about 6 wt%.

The average diameter of the nanocellulose may range from about 0.5 nm to about 10 nm. The average diameter of the nanocellulose may range from about 1 nm to about 8 nm. The average diameter of the nanocellulose may range from about 1.5 nm to about 7 nm.

The average length of the nanocellulose may range from about 20 nm to about 300 nm. The average length of the nanocellulose may range from about 30 nm to about 180 nm. The average length of the nanocellulose may range from about 35 nm to about 150 nm.

When the diameter and length of the nanocellulose satisfy the above-noted ranges, the biodegradability and properties of the biodegradable polyester resin or the biodegradability and properties of a biodegradable polyester sheet, film and molded article made using the biodegradable polyester resin may be further improved. See tables and examples herein.

The diameter and length of the nanocellulose may be measured by atomic force microscopy in a water-dispersed state.

The sulfur content of the nanocellulose may range from about 0.1 wt% to about 1.2 wt% based on the total amount of the nanocrystalline cellulose. The sulfur content of the nanocellulose may range from about 0.2 wt% to about 1.1 wt% based on the total amount of the nanocellulose.

The pH of the nanocellulose may be 5 to 8. The pH of the nanocellulose may be 6 to 8.

The zeta potential of the nanocellulose may range from about -25 mV to about -50 mV. The zeta potential of the nanocellulose may range from about -30 mV to about -45 mV.

The nanocellulose may be included in a content ranging from about 0.01 parts by weight to about 2 parts by weight in the biodegradable polyester resin composition according to one embodiment based on 100 parts by weight of the biodegradable polyester resin. The nanocellulose may be included in a content ranging from about 0.03 parts by weight to about 1.5 parts by weight in the biodegradable polyester resin composition according to one embodiment based on 100 parts by weight of the biodegradable polyester resin. The nanocellulose may be included in a content

ranging from about 0.04 parts by weight to about 1.2 parts by weight in the biodegradable polyester resin composition according to one embodiment based on 100 parts by weight of the biodegradable polyester resin. The nanocellulose may be included in a content ranging from about 0.05 parts by weight to about 1 part by weight in the biodegradable polyester resin composition according to one embodiment based on 100 parts by weight of the biodegradable polyester resin.

Since the nanocellulose has the characteristics, it may be uniformly dispersed in the biodegradable polyester resin composition according to one embodiment.

Since the nanocellulose has the characteristics, it may improve the mechanical properties of the biodegradable polyester resin composition according to one embodiment.

In addition, the nanocellulose severs as a nucleating agent, thereby being capable of improving the crystallization rate of the biodegradable polyester resin composition according to one embodiment. Accordingly, the nanocellulose may increase the crystallization temperature of the biodegradable polyester resin composition according to one embodiment. Since the nanocellulose has the characteristics, the biodegradable polyester resin composition according to one embodiment may have appropriate UV resistance.

Since the nanocellulose has the characteristics, the biodegradable polyester resin composition according to one embodiment may have an appropriate biodegradation rate.

Since the nanocellulose has the characteristics, the biodegradable polyester resin composition according to one embodiment may have an appropriate hydrolysis rate.

The biodegradable polyester resin composition according to one embodiment may include a metal salt.

The metal salt may be included in a content ranging from about 0.1 ppm to about 1000 ppm based on the total weight of the biodegradable polyester resin composition according to one embodiment. The metal salt may be included in a content ranging from about 1 ppm to about 500 ppm based on the total weight of the biodegradable polyester resin composition according to one embodiment. The metal salt may be included in a content ranging from about 1 ppm to about 100 ppm based on the total weight of the biodegradable polyester resin composition according to one embodiment. The metal salt may be included in a content ranging from about 1 ppm to about 50 ppm based on the total weight of the biodegradable polyester resin composition according to one embodiment.

The metal salt may be at least one or more selected from the group consisting of a nitrate, a sulfate, hydrochloride, a carboxylate and the like. The metal salt may be at least one or more selected from the group consisting of titanium salt, silicon salt, sodium salt, calcium salt, potassium salt, magnesium salt, copper salt, iron salt, aluminum salt, silver salt and the like. The metal salt may be at least one or more selected from the group consisting of magnesium acetate, calcium acetate, potassium acetate, copper nitrate, silver nitrate, sodium nitrate, and the like.

The metal salt may include one or more selected from the group consisting of iron (Fe), magnesium (Mg), nickel (Ni), cobalt (Co), copper (Cu), palladium (Pd), zinc (Zn), vanadium (V), titanium, (Ti), indium ( In), manganese (Mn), silicon (Si) and tin (Sn).

In addition, the metal salt may be selected from the group consisting of acetate, nitrate, nitride, sulfide, sulfate, sulfoxide, hydroxide, hydrate, chloride, chlorinate and bromide.

Since the biodegradable polyester resin composition according to one embodiment includes the metal salt within the content, a hydrolysis rate and a biodegradation rate may be appropriately controlled.

The biodegradable polyester resin composition according to one embodiment may further include an anti-hydrolysis agent.

The anti-hydrolysis agent may be at least one or more selected from among silicone-based compounds such as silane, silazane and siloxane.

The anti-hydrolysis agent may include alkoxy silane. The anti-hydrolysis agent may include trimethoxy silane and/or triethoxy silane. The anti-hydrolysis agent may include alkoxy silane including an epoxy group. The anti-hydrolysis agent may include at least one or more selected from the group consisting of 2-(3,4-epoxycyclohexyl) ethyltrimethoxysilane, 3-glycidoxypropyl methyldimethoxysilane, 3-glycidoxypropyl trimethoxysilane, 3-glycidoxypropyl methyldiethoxysilane and 3-glycidoxypropyl triethoxysilane.

The anti-hydrolysis agent may be included in a content ranging from about 1 ppm to about 10000 ppm in the biodegradable polyester resin composition according to one embodiment. The anti-hydrolysis agent may be included in a content ranging from about 1 ppm to about 1000 ppm in the biodegradable polyester resin composition according to one embodiment. The anti-hydrolysis agent may be included in a content ranging from about 5 ppm to 500 ppm in the biodegradable polyester resin composition according to one embodiment. The anti-hydrolysis agent may be included in a content ranging from about 10 ppm to 300 ppm in the biodegradable polyester resin composition according to one embodiment.

The anti-hydrolysis agent may be bonded to the biodegradable polyester resin. The anti-hydrolysis agent may be chemically bonded to the biodegradable polyester resin. The anti-hydrolysis agent may be chemically bonded to a polymer included in the biodegradable polyester resin. The anti-hydrolysis agent may couple polymers included in the biodegradable polyester resin.

Since the biodegradable polyester resin composition according to one embodiment includes the anti-hydrolysis agent within the range, it may have appropriate hydrolysis resistance. In particular, since the biodegradable polyester resin according to one embodiment includes the anti-hydrolysis agent within the range, it may have appropriate initial hydrolysis characteristics and improved biodegradability.

Accordingly, the biodegradable polyester resin composition according to one embodiment may include a silicon element. The biodegradable polyester resin composition according to one embodiment may include the silicon element in a content ranging from about 1 ppm to about 150 ppm. The biodegradable polyester resin composition according to one embodiment may include the silicon element in a content ranging from about 0.1 ppm to about 100 ppm. The biodegradable polyester resin composition according to one embodiment may include the silicon element in a content ranging from about 0.1 ppm to about 50 ppm. The biodegradable polyester resin composition according to one embodiment may include the silicon element in a content ranging from about 0.1 ppm to about 20 ppm.

In addition, the anti-hydrolysis agent may also react with a terminal carboxyl group or an unreacted carboxyl group. Accordingly, the biodegradable polyester resin composition according to one embodiment may have a low acid value.

In addition, the anti-hydrolysis agent may couple polymers included in the biodegradable polyester resin, so that the biodegradable polyester resin composition according to one embodiment may increase the ratio of high-molecular-weight polymers. Accordingly, the mechanical properties of the biodegradable polyester resin composition according to one embodiment may be improved.

The biodegradable polyester resin composition according to one embodiment may further include a chain extender.

The chain extender may include isocyanate.

The chain extender may be at least one or more selected from the group consisting of monofunctional isocyanate or polyfunctional isocyanate.

The chain extender may be at least one or more selected from the group consisting of tolylene 2,4-diisocyanate, tolylene 2,6-diisocyanate, diphenylmethane 4,4'-diisocyanate and 2,4'-diisocyanate, naphthalene 1,5-diisocyanate, xylylene diisocyanate, hexamethylene diisocyanate, pentamethylene diisocyanate, isophorone diisocyanate and methylenebis(4-isocyanatocyclohexane).

The chain extender may include triisocyanate. The chain extender may include tri(4-isocyanatophenyl)methane.

The chain extender may include an acrylic polymer. The acrylic polymer may include an acryl group. The acryl group may be bonded to a main chain as a side chain. The acrylic polymer may include an epoxy group. The epoxy group may be bonded to the main chain as a side chain.

The chain extender may include a styrene-based polymer. The chain extender may include a styrene-based glycidyl acrylate.

The chain extender may be chemically bonded to the biodegradable polyester resin. The chain extender may be chemically bonded to a polymer included in the biodegradable polyester resin. The chain extender may be bonded to a terminal of the polymer included in the biodegradable polyester resin. In addition, the chain extender may be bonded to terminals of three polymers included in the biodegradable polyester resin.

The chain extender may be included in the biodegradable polyester resin composition according to one embodiment in a content ranging from about 0.1 wt% to about 10 wt% based on the total amount of the composition. The chain extender may be included in the biodegradable polyester resin composition according to one embodiment in a content ranging from about 0.2 wt% to about 8 wt% based on the total amount of the composition. The chain extender may be included in the biodegradable polyester resin composition according to one embodiment in a content ranging from about 0.3 wt% to about 7 wt% based on the total amount of the composition.

When the biodegradable polyester resin composition according to one embodiment includes the chain extender within the range, it may have appropriate hydrolysis resistance and appropriate biodegradability.

In addition, the chain extender may react with a terminal carboxyl group or an unreacted carboxyl group. Accordingly, the biodegradable polyester resin composition according to one embodiment may have a low acid value.

In addition, the chain extender couples polymers included in the biodegradable polyester resin, so that the biodegradable polyester resin composition according to one embodiment may increase the ratio of high-molecular-weight polymers. Accordingly, the mechanical properties of the biodegradable polyester resin composition according to one embodiment may be improved.

The biodegradable polyester resin composition according to one embodiment may include an oligomer. The molecular weight of the oligomer may range from about 400 to about 1300.

The oligomer may be included in the biodegradable polyester resin composition according to one embodiment in a content ranging from about 3000 ppm to about 30000 ppm based on the total amount of the resin composition. The oligomer may be included in the biodegradable polyester resin composition according to one embodiment in a content ranging from about 5000 ppm to about 20000 ppm based on the total amount of the resin composition. The oligomer may be included in the biodegradable polyester resin composition according to one embodiment in a content ranging

from about 5000 ppm to about 15000 ppm based on the total amount of the resin composition. The oligomer may be included in the biodegradable polyester resin composition according to one embodiment in a content ranging from about 7000 ppm to about 15000 ppm based on the total amount of the resin composition.

The oligomer may be a reaction product of at least two or more of the diol, the aromatic dicarboxylic acid and the aliphatic dicarboxylic acid. The oligomer may be a reaction product of 1,4-butanediol, terephthalic acid and adipic acid.

The oligomer may include an oligomer in which a molar ratio of the aliphatic dicarboxylic acid is higher than that of the aromatic dicarboxylic acid. In the oligomer, a ratio of an oligomer containing a relatively large amount of the aliphatic dicarboxylic acid may be higher than a ratio of an oligomer containing a relatively large amount of the aromatic dicarboxylic acid.

The oligomer may appropriately control the hydrolysis degree of the biodegradable polyester resin composition according to one embodiment. The oligomer may be a hydrolysis regulator that appropriately controls the hydrolysis degree of the biodegradable polyester resin composition according to one embodiment.

In addition, the oligomer may appropriately control the biodegradability of the biodegradable polyester resin composition according to one embodiment. The oligomer may be a biodegradation regulator that appropriately controls the biodegradability of the biodegradable polyester resin composition according to one embodiment.

The biodegradable polyester resin composition according to one embodiment may comprise a heat stabilizer. The heat stabilizer may be a phosphorus-based heat stabilizer.

The heat stabilizer may be at least one or more selected from the group consisting of an amine-based high-temperature heat stabilizer such as tetraethylenepentamine, triethylphosphonoacetate, phosphoric acid, phosphorous acid, polyphosphric acid, trimethyl phosphate (TMP), triethyl phosphate, trimethyl phosphine, triphenyl phosphine and the like.

In addition, the heat stabilizer may be an antioxidant having an antioxidant function.

The content of the heat stabilizer may range from about 3000 ppm or less based on the total weight of the biodegradable polyester resin. The content of the heat stabilizer may be, for example, 10 ppm to 3,000 ppm, 20 ppm to 2,000 ppm, 20 ppm to 1,500 ppm or 20 ppm to 1,000 ppm based on the total weight of the biodegradable polyester resin. When the content of the heat stabilizer satisfies the range, the deterioration of the polymer due to high temperature during the reaction process may be controlled so that terminal groups of the polymer may be reduced and the color may be improved. In addition, the heat stabilizer may suppress the activation of a titanium-based catalyst, thereby controlling a reaction rate.

The biodegradable polyester resin composition according to one embodiment may include an elongation improver. Examples of the elongation improver include oil such as paraffin oil, naphthenic oil, or aromatic oil, or adipate such as dibutyl adipate, diethylhexyl adipate, dioctyl adipate, or diisopropyl adipate.

The elongation improver may be included in the biodegradable polyester resin composition according to one embodiment in a content ranging from about 0.001 parts by weight to about 1 part by weight based on 100 parts by weight of the biodegradable polyester resin. The elongation improver may be included in a content ranging from about 0.01 parts by weight to about 1 part by weight based on 100 parts by weight of the biodegradable polyester resin in the biodegradable polyester resin composition according to one embodiment.

The biodegradable polyester resin composition according to one embodiment may include an inorganic filler. The inorganic filler may be at least one or more selected from the group consisting of calcium sulfate, barium sulfate, talc, talc powder, bentonite, kaolinite, chalk powder, calcium carbonate, graphite, gypsum, electrically conductive carbon black, calcium chloride, iron oxide, aluminum oxide, potassium oxide, dolomite, silicon dioxide, wollastonite, titanium dioxide, silicate, mica, glass fiber, mineral fiber, and the like.

In particle diameter distribution obtained by laser diffraction for the inorganic filler, a cumulative 50% particle diameter ($D_{50}$) based on volume may range from about 100 $\mu$m or less, about 85 $\mu$m or less, about 70 $\mu$m or less, about 50 $\mu$m or less, about 25 $\mu$m or less, about 10 $\mu$m or less, about 5 $\mu$m or less, about 3 $\mu$m or less or about 1 $\mu$m or less.

In addition, the specific surface area of the inorganic filler may range from about 100 $m^2/g$ or more. For example, the specific surface area of the inorganic filler may range from about 100 $m^2/g$ or more, about 105 $m^2/g$ or more or about 110 $m^2/g$ or more.

The inorganic filler may be included in the biodegradable polyester resin composition according to one embodiment in a content ranging from about 3 parts by weight to about 50 parts by weight based on 100 parts by weight of the biodegradable polyester resin. The inorganic filler may be included in the biodegradable polyester resin composition according to one embodiment in a content ranging from about 5 parts by weight to about 30 parts by weight based on 100 parts by weight of the biodegradable polyester resin.

The inorganic filler may be included in a content ranging from about 3,000 ppm or less based on the total weight of the biodegradable polyester resin composition according to one embodiment. For example, the content of the inorganic filler may range from about 3,000 ppm or less, about 1,500 ppm or less, about 1,200 ppm or less, about 800 ppm or less or about 600 ppm or less, particularly about 50 ppm or more, about 100 ppm or more, about 130 ppm or more, about 150 ppm or more or about 180 ppm or more based on the total weight of the biodegradable polyester resin

composition according to one embodiment.

Since the biodegradable polyester resin composition according to the above described embodiment includes the inorganic filler within the ranges noted above, the biodegradable polyester resin composition (according to one embodiment) may have appropriate mechanical properties, an appropriate UV resistance, an appropriate biodegradation rate and an appropriate hydrolysis rate. See tables and examples herein.

The biodegradable polyester resin composition according to one embodiment may further include a heterogeneous biodegradable resin. The biodegradable polyester resin composition according to an example may be a composite resin composition including two or more types of resins, a filler and an additive.

The heterogeneous biodegradable resin may be at least one or more selected from the group consisting of polybutylene azelate terephthalate (PBAzT), polybutylene sebacate terephthalate (PBSeT) and polybutylene succinate terephthalate (PBST), polyhydroxyalkanoate (PHA) or polylactic acid (PLA).

The heterogeneous biodegradable resin may be included in the biodegradable polyester resin composition according to one embodiment in a content ranging from about 10 parts by weight to about 100 parts by weight based on 100 parts by weight of the biodegradable polyester resin. The heterogeneous biodegradable resin may be included in the biodegradable polyester resin composition according to one embodiment in a content ranging from about 10 parts by weight to about 60 parts by weight based on 100 parts by weight of the biodegradable polyester resin. The heterogeneous biodegradable resin may be included in the biodegradable polyester resin composition according to one embodiment in a content ranging from about 20 parts by weight to about 50 parts by weight based on 100 parts by weight of the biodegradable polyester resin.

The heterogeneous biodegradable resin may supplement the mechanical, optical and chemical properties of the biodegradable polyester resin. Since the biodegradable polyester resin composition according to one embodiment includes the heterogeneous biodegradable resin in the content, the biodegradable polyester resin composition according to one embodiment may have mechanical properties, appropriate UV resistance, an appropriate biodegradation rate and an appropriate hydrolysis rate.

In addition, the amount of carboxyl terminal groups of the biodegradable polyester resin composition according to one embodiment may range from about 50 eq/ton or less. For example, the number of the carboxyl terminal groups of the biodegradable polyester resin according to one embodiment may range from about 50 eq/ton or less, about 48 eq/ton or less, about 45 eq/ton or less or about 42 eq/ton or less. When the number of the carboxyl terminal groups is adjusted to the range, deterioration may be prevented and improved mechanical properties may be implemented when the biodegradable polyester resin composition according to one embodiment is extruded to form a molded article.

In addition, the intrinsic viscosity (IV) of the biodegradable polyester resin composition according to one embodiment may range from about 0.9 dl/g or more. The intrinsic viscosity of the biodegradable polyester resin composition according to one embodiment may range from about 0.95 dl/g or more, about 1.0 dl/g or more, about 1.1 dl/g or more, about 1.2 dl/g or more or about 1.3 dl/g or more. The intrinsic viscosity of the biodegradable polyester resin composition according to one embodiment may range from about 0.95 dl/g to about 1.7 dl/g. The intrinsic viscosity of the biodegradable polyester resin composition according to one embodiment may range from about 1.3 dl/g to about 1.7 dl/g. The intrinsic viscosity of the biodegradable polyester resin composition according to one embodiment may range from about 1.4 dl/g to about 1.7 dl/g.

A process of preparing the biodegradable polyester resin composition according to one embodiment is as follows.

Referring to FIG. 1, an apparatus for producing the biodegradable polyester resin includes a slurry stirrer 100, an esterification part 200, a polycondensation reaction part 300, a post-treatment part 400, a first recovery part 510 and a second recovery part 520.

A method of preparing the biodegradable polyester resin includes a step of preparing a slurry including the diol and the aromatic dicarboxylic acid.

The step of preparing a slurry includes a step of mixing and processing the diol and the aromatic dicarboxylic acid. That is, the step of preparing a slurry is a pretreatment step before an esterification and may be a step of mixing the diol and the aromatic dicarboxylic acid and slurrying the mixture. Here, the diol may include a biomass-based diol component.

The temperature of the slurry of the diol and the aromatic dicarboxylic acid may range from about 5°C to about 15°C higher than the melting point of the diol. For example, when the diol is 1,4-butanediol, the temperature of the slurry may range from about 35°C to about 45°C.

The diol and the aromatic dicarboxylic acid are fed into and stirred in the slurry stirrer 100, thereby preparing the slurry.

By mixing, pre-treating, and slurrying the diol and the aromatic dicarboxylic acid, the diol and the aromatic dicarboxylic acid may be uniformly reacted and the speed of an esterification may be effectively accelerated, thereby increasing reaction efficiency.

In particular, when an aromatic dicarboxylic acid, such as terephthalic acid, has complete crystallinity and is in

powder form, it may be difficult to cause a homogeneous reaction due to very low solubility in the diol. Therefore, the slurrying pretreatment process may provide a biodegradable polyester resin, sheet, film and molded article having excellent properties (according to one embodiment of the present disclosure) and may assist in improving reaction efficiency.

When the aromatic dicarboxylic acid is terephthalic acid, the terephthalic acid is a white crystal that has complete crystallinity and sublimes at around 300°C under atmospheric pressure without a melting point. In addition, the terephthalic acid has very low solubility in the diol, making it difficult for a homogeneous reaction to occur. Accordingly, when a pretreatment process is performed before an esterification, a uniform reaction may be induced by increasing the surface area for reacting with a diol in a solid matrix of terephthalic acid.

In addition, when the aromatic dicarboxylic acid is dimethyl terephthalate, the dimethyl terephthalate may be made into a molten state at about 142°C to 170°C by the pretreatment process and reacted with the diol, so that an esterification can be proceeded faster and more efficiently.

Meanwhile, in the pretreatment step of preparing the slurry, the structure and properties of the biodegradable polyester resin may vary depending on the particle diameter, particle diameter distribution, pretreatment reaction conditions, and the like of the aromatic dicarboxylic acid.

For example, the aromatic dicarboxylic acid may include terephthalic acid, and the terephthalic acid may have an average particle diameter (D50) of 10 μm to 400 μm measured by a particle size analyzer Microtrac S3500 in a particle size distribution (PSD), and a standard deviation of the average particle diameter (D50) may be 100 or less. The standard deviation means the square root of the variance. The average particle diameter (D50) of the terephthalic acid may range from for example 20 μm to 200 μm, for example 30 μm to 180 μm, or for example 100 μm to 160 μm. When the average particle diameter (D50) of the terephthalic acid satisfies this range, it may be more advantageous in terms of the solubility improvement of the diol and the reaction rate.

In the pretreatment process, the diol and the aromatic dicarboxylic acid may be mixed and fed into the slurry stirrer 100 (tank).

The slurry stirrer 100 may be provided with, for example, an anchor-type bottom, a height to the agitator of 20 mm or more, and two or more rotary blades, which may be more advantageous to achieve an efficient stirring effect.

For example, the slurry stirrer 100 has a height of 20 mm or more to the agitator, i.e., the reactor and the bottom of the agitator may be almost attached to each other. In this case, a slurry may be obtained without precipitation. If the shape, shape and rotary blades of the agitator do not satisfy the conditions, the aromatic dicarboxylic acid may precipitate to the bottom when the diol and the aromatic dicarboxylic acid are initially mixed. In this case, phase separation may occur.

The pretreatment step of preparing the slurry may include a step of mixing the diol and the aromatic dicarboxylic acid and stirring the mixture about 50 rpm to about 200 rpm at about 30°C to about 100°C for 10 minutes or more, for example 10 minutes to 200 minutes.

The diol may have characteristics as described above.

The diol may be added at one time or dividedly. For example, the diol may be added dividedly when mixing with an aromatic dicarboxylic acid and when mixing with an aliphatic dicarboxylic acid.

The aromatic dicarboxylic acid may have characteristics as described above.

In the pretreatment step of preparing the slurry, a molar ratio of the diol to the aromatic dicarboxylic acid may range from about 0.8:1 to about 2:1. In the pretreatment step of preparing the slurry, a molar ratio of the diol to the aromatic dicarboxylic acid may range from about 1.1:1 to about 1.5:1. In the pretreatment step of preparing the slurry, a molar ratio of the diol to the aromatic dicarboxylic acid may range from about 1.2:1 to about 1.5:1.

When the diol is added in a larger amount than the aromatic dicarboxylic acid, the aromatic dicarboxylic acid may be easily dispersed.

In addition, an additive may be added to the slurry. The nanocellulose and/or the metal salt may be added in the form of a dispersion or solution to the slurry.

In the method of preparing the biodegradable polyester resin, a prepolymer is obtained by esterification using a slurry obtained by mixing and pretreating a diol and an aromatic dicarboxylic acid, and the prepolymer is condensation-polymerized, so that the desired structure and physical properties of the biodegradable polyester resin according to the embodiment of the present disclosure may be efficiently achieved.

The method of preparing the biodegradable polyester resin includes a step of esterifying the slurry and the aliphatic dicarboxylic acid to prepare a prepolymer. The slurry and the aliphatic dicarboxylic acid may be reacted in the ester reaction part.

In the esterification, the reaction time may be shortened by using the slurry. For example, a slurry obtained from the pretreatment step may shorten the reaction time of the esterification by 1.5 times or more.

The esterification may be performed at least twice. A prepolymer to be added to a condensation polymerization process may be formed by the esterification.

In one embodiment, the esterification may be performed at once after adding an aliphatic dicarboxylic acid, or a diol and an aliphatic dicarboxylic acid to the slurry. That is, the esterification may proceed when the slurry is fed into

the esterification reactor and the aliphatic dicarboxylic acid alone or the aliphatic dicarboxylic acid and the diol are fed into the esterification reactor.

The diol and the aliphatic dicarboxylic acid may be added in the form of a slurry to a slurry including the aromatic dicarboxylic acid.

In the slurry of the diol and the aliphatic dicarboxylic acid, the average particle diameter (D50) of the aliphatic dicarboxylic acid may range from about 50 $\mu$m to about 150 $\mu$m. In the slurry of the diol and the aliphatic dicarboxylic acid, the average particle diameter (D50) of the aliphatic dicarboxylic acid may range from about 60 $\mu$m to about 120 ,urn.

In the esterification, the total number of moles of the diols introduced may range from about 1.0 to about 1.8 relative to the total number of moles of the aromatic dicarboxylic acid and the aliphatic dicarboxylic acid. In the esterification, the total number of moles of the diols introduced may range from about 1.1 to about 1.6 relative to the total number of moles of the aromatic dicarboxylic acid and the aliphatic dicarboxylic acid.

In addition, the temperature of the slurry of the diol and the aliphatic dicarboxylic acid may range from about 5°C to about 15°C higher than the melting point of the diol.

In addition, various additives such as the nanocellulose may also be added to the slurry of the diol and the aliphatic dicarboxylic acid.

The esterification may be performed at about 250°C or less for about 0.5 hours to about 5 hours. Specifically, the esterification may be performed at about 180°C to about 250°C, about 185°C to about 240°C or about 200°C to about 240°C under normal pressure or reduced pressure until the theoretical amount of water as a byproduct reaches 95%. For example, the esterification may be performed for 0.5 hours to 5.5 hours, 0.5 hours to 4.5 hours or 1 hour to 4 hours, but is not limited thereto.

In one embodiment, the slurry, the aliphatic dicarboxylic acid and the diol may be mixed, and a first esterification may be performed. In the reaction mixture for the first esterification, a molar ratio of an aromatic dicarboxylic acid to the aliphatic dicarboxylic acid may be 1:0.05 to 1:0.5.

In addition, after the first esterification, the mixture of the slurry, the aliphatic dicarboxylic acid and the diol is fed into the esterification part and may undergo a second esterification together with the first esterification product. In the mixture fed into the second esterification, a molar ratio of the aromatic dicarboxylic acid to the aliphatic dicarboxylic acid may be 0.05:1 to 0.5:1.

The first esterification may be performed at 250°C or less for 1.25 hours to 4 hours. Specifically, the first esterification may be performed at 180°C to 250°C, 185°C to 240°C or 200°C to 240°C under normal pressure or reduced pressure until the theoretical amount of water as a by-product reaches 95%. For example, the first esterification may be performed for 1.25 hours to 4 hours, 1.25 hours to 3.5 hours or 2.5 hours to 3 hours, but is not limited thereto.

The second esterification may be performed for 0.25 hours to 3.5 hours at about 250°C or less. Specifically, the second esterification may be performed at 180°C to 250°C, 185°C to 240°C or 200°C to 240°C under normal pressure or reduced pressure until the theoretical amount of water as a by-product reaches 95%. For example, the second esterification may be performed for 0.5 hours to 3 hours, 1 hour to 2.5 hours or 1.5 hours to 2.5 hours, but is not limited thereto.

In the first esterification and the second esterification, the number ratio, the alternating ratio, the hard segment ratio, the soft segment ratio, and the like of the first block and the second block may be controlled by adjusting the reaction temperature, the reaction time, and the contents of diol, aromatic dicarboxylic acid, and aliphatic dicarboxylic acid added, respectively. In addition, when the esterification is divided into the first esterification and the second esterification, the overall esterification may be precisely controlled. Accordingly, when the esterification is divisionally performed, the reaction stability and reaction uniformity of the esterification may be improved.

In addition, in the second esterification, the branching agent may be additionally added. That is, the prepolymer may be formed by reacting the mixture of the slurry, the aliphatic dicarboxylic acid and the diol, the branching agent and the first esterification product. The characteristics and content of the branching agent may be the same as described above.

After completing the second esterification, a third esterification may be performed. Here, a monomer composition including at least one or more of the diol, the aromatic dicarboxylic acid and the aliphatic dicarboxylic acid may be added to the second esterification product and the third esterification may be performed.

The monomer composition may be added to the second esterification product in a content ranging from about 0.5 parts by weight to about 10 parts by weight based on 100 parts by weight of the second esterification product.

In addition, in the monomer composition, a molar ratio of the aromatic dicarboxylic acid to the aliphatic dicarboxylic acid may range from about 1:1 to about 1:3. In the monomer composition, a molar ratio of the aromatic dicarboxylic acid to the aliphatic dicarboxylic acid may range from about 1:1.3 to about 1:3.

In addition, in the monomer composition, a molar ratio of the diol to all the dicarboxylic acids may range from about 0.8:1 to 1:1.2.

The third esterification may be performed at about 250°C or less for 0.1 hours to 0.5 hours. Specifically, the third esterification may be performed at 180°C to 250°C, 185°C to 240°C or 200°C to 240°C under normal pressure or

reduced pressure. For example, the third esterification may be performed for 5 minutes to 60 minutes, 10 minutes to 50 minutes or 10 minutes to 40 minutes, but is not limited thereto.

By the third esterification, a prepolymer may be formed.

When using the monomer composition and performing the third esterification under the above-described conditions, the alternating ratio, the hard segment ratio and the soft segment ratio may be appropriately controlled.

In the third esterification, the second esterification product may not be used. That is, the third esterification may be performed by the monomer composition and other additives such as a catalyst. Next, the second esterification product and the third esterification product are mixed to produce the prepolymer. Here, the third esterification product may be mixed with the second esterification product in a content ranging from about 0.1 parts by weight to about 5 parts by weight based on 100 parts by weight of the second esterification product, thereby producing the prepolymer.

The number average molecular weight of the prepolymer may range from about 500 to about 10000 g/mol. For example, the number average molecular weight of the prepolymer may range from about 500 to about 8500 g/mol, about 500 to about 8000 g/mol, about 500 to about 7000 g/mol, about 500 g/mol to about 5000 g/mol, or about 800 g/mol to about 4000 g/mol. When the number average molecular weight of the prepolymer satisfies the range, the molecular weight of a polymer in a polycondensation reaction may be efficiently increased.

The number average molecular weight may be measured using gel permeation chromatography (GPC). Specifically, data obtained by gel permeation chromatography includes various items such as Mn, Mw and Mp. Thereamong, the molecular weight may be measured based on the number average molecular weight (Mn).

The reinforcing material, the branching agent, the ester polyol or the metal salt may be added together with the slurry before the esterification. The reinforcing material, the branching agent, the ester polyol and/or the metal salt may be fed into the esterification part 200 in the middle of the esterification. The reinforcing material, the branching agent, the ester polyol and/or the metal salt may be fed into the esterification product after the esterification. In addition, the reinforcing material, the branching agent, the ester polyol and/or the metal salt may be added together with the aliphatic dicarboxylic acid. In addition, the reinforcing material, the branching agent, the ester polyol and/or the metal salt may be fed into the esterification part 200 after the first esterification and before the second esterification.

Since the reinforcing material and/or the metal salt is added during the esterification, the reinforcing material and/or the metal salt may be uniformly dispersed in the biodegradable polyester resin.

The reinforcing material may have the above-described characteristics. In particular, the nanocellulose may be used as the reinforcing material.

The nanocellulose may be pre-treated by a bead mill, pre-treated by ultrasonic waves, or pre-treated by high-speed dispersion at about 1000 rpm to about 1500 rpm before being introduced. Specifically, the nano-cellulose may be water-dispersed nano-cellulose pre-treated with a bead mill or pre-treated with ultrasonic waves.

First, the bead mill pretreatment may be performed with a vertical mill or horizontal mill as a wet milling device. The horizontal mill is preferable in that the amount of beads that can be filled into a chamber is larger, and the uneven wear of the machine is reduced, the wear of the beads is reduced, and maintenance is easier, but is not limited thereto.

The bead mill pretreatment may be performed using one or more bead types selected from the group consisting of zirconium, zircon, zirconia, quartz and aluminum oxide.

Specifically, the bead mill pretreatment may be performed using beads having a diameter of about 0.3 mm to about 1 mm. For example, the diameter of the beads may range from about 0.3 mm to about 0.9 mm, about 0.4 mm to about 0.8 mm, about 0.45 mm to about 0.7 mm or about 0.45 mm to about 0.6 mm.

When the diameter of the beads satisfies the range, the dispersibility of nanocellulose may be further improved. When the diameter of the beads exceeds the range, the average particle diameter and average particle deviation of nanocellulose increase, resulting in low dispersibility.

In addition, in the bead mill pretreatment, it is preferable to use beads with a higher specific gravity than that of nanocellulose in that sufficient energy can be delivered. For example, the beads may be one or more selected from the group consisting of zirconium, zircon, zirconia, quartz and aluminum oxide which have a higher specific gravity than water-dispersed nanocellulose, and zirconium beads having a specific gravity four times or higher than the water-dispersed nanocellulose are preferred, without being not limited thereto.

In addition, the ultrasonic pretreatment is a method of physically closing or pulverizing nanoparticles with waves generated by emitting 20 kHz ultrasound into a solution.

The ultrasonic pretreatment may be performed for less than 30 minutes at an output of 30000 J/s or less. For example, the ultrasonic pretreatment may be performed at an output of 25000 J/s or less or 22000 J/s or less for 25 minutes or less, 20 minutes or less or 18 minutes or less. When the output and the execution time satisfy the above ranges, the effect, i.e., the improvement of dispersibility, of the ultrasonic pretreatment may be maximized. When the output exceeds the above range, the nanoparticles may rather re-agglomerate and the dispersibility may be lowered.

The nanocellulose according to one embodiment may be pre-treated with a bead mill or pre-treated with ultrasonic waves. Alternatively, the nanocellulose according to one embodiment may be pre-treated with a bead mill and pre-treated with ultrasonic waves. Here, it is preferred to perform ultrasonic pretreatment after pre-treating with a bead

mill in terms of improving dispersibility by preventing re-agglomeration.

The nanocellulose according to one embodiment may be pre-treated with a bead mill or pre-treated with ultrasonic waves. Alternatively, the nanocellulose according to one embodiment may be pre-treated with a bead mill and pre-treated with ultrasonic waves. Here, it is preferred to perform ultrasonic pretreatment after pretreatment with a bead mill in terms of improving dispersibility by preventing reagglomeration.

Since the nanocellulose includes an ion-bonded metal, it has very high dispersibility in water. In addition, an aqueous dispersion having a very high dispersion of the nanocellulose may be obtained by the bead mill pretreatment and/or the ultrasonic pretreatment. In the aqueous nanocellulose dispersion, the content of the nanocellulose may range from about 1 wt% to about 50 wt%.

In the esterification, a titanium-based catalyst and/or a germanium-based catalyst may be used. Specifically, the titanium-based catalyst and/or the germanium-based catalyst may be added to the slurry, and the esterification may be performed.

In addition, the titanium-based catalyst and/or the germanium-based catalyst may be added to the slurry before the first esterification, and the titanium-based catalyst and/or the germanium-based catalyst may be further added to the product of the first esterification.

The biodegradable polyester resin may include one or more titanium-based catalysts selected from the group consisting of titanium isopropoxide, antimony trioxide, dibutyltin oxide, tetrapropyl titanate, tetrabutyl titanate, tetraisopropyl titanate, antimonia acetate, calcium acetate and magnesium acetate, or one or more germanium-based catalysts selected from the group consisting of germanium oxide, germanium methoxide, germanium ethoxide, tetramethyl germanium, tetraethyl germanium and germanium sulfide.

In addition, the content of the catalyst may range from about 50 ppm to 2000 ppm based on a total weight of a diol, an aromatic dicarboxylic acid, and an aliphatic dicarboxylic acid. For example, about 60 ppm to about 1600 ppm, about 70 ppm to about 1400 ppm, about 80 ppm to about 1200 ppm or about 100 ppm to about 1100 ppm of titanium-based catalyst or germanium-based catalyst may be included. When the content of the catalyst satisfies the range, the physical properties may be further improved.

In addition, the heat stabilizer may be added together with the slurry before the esterification. The heat stabilizer may be fed into the esterification part 200 in the middle of the esterification. The heat stabilizer may be added to the esterification product after the esterification. In addition, the heat stabilizer may be added together with the aliphatic dicarboxylic acid. In addition, the heat stabilizer may be fed into the esterification part 200 after the first esterification and before the second esterification.

The characteristics of the heat stabilizer may be as described above.

The content of the heat stabilizer may be 3,000 ppm or less based on a total weight of a diol, an aromatic dicarboxylic acid, and an aliphatic dicarboxylic acid. Specifically, the content of the heat stabilizer may be, for example, 10 ppm to 3,000 ppm, 20 ppm to 2,000 ppm, 20 ppm to 1,500 ppm or 20 ppm to 1,000 ppm based on a total weight of a diol, an aromatic dicarboxylic acid, and an aliphatic dicarboxylic acid. When the content of the heat stabilizer satisfies the range, the deterioration of the polymer due to high temperature during the reaction process may be controlled, the terminal groups of the polymer may be reduced and the color may be improved.

After completion of the esterification, one or more selected from the group consisting of an additive such as silica, potassium or magnesium and a color-correcting agent such as cobalt acetate may be further added to the esterification product. That is, after completion of the esterification, the additive and/or the color-correcting agent may be added and stabilized, and then a polycondensation reaction may be performed. The additive and/or the color-correcting agent may be added after completion of the esterification, and may be fed into the polycondensation reaction part 300 together with the prepolymer. Accordingly, the additive and/or the color-correcting agent may be uniformly dispersed in the biodegradable polyester resin.

In addition, after completion of the esterification, the inorganic filler may be added to the esterification product. That is, the inorganic filler is added and stabilized after completion of the esterification, and then the polycondensation reaction may be performed. The characteristics of the inorganic filler are as described above. The inorganic filler may be fed into the polycondensation reaction part 300 together with the prepolymer, and the condensation polymerization process may be performed. Accordingly, the inorganic filler may be uniformly dispersed in the biodegradable polyester resin.

In addition, the first recovery part 510 recovers by-products such as water from the esterification part 200. The first recovery part 510 may recover by-products generated from the esterification by applying vacuum pressure to the esterification part 200 or proceeding with reflux.

The method of preparing the biodegradable polyester resin includes a step of polycondensing the prepolymer. The polycondensation reaction may be performed as follows.

The prepolymer is fed into the polycondensation reaction part 300. In addition, at least one or more of the reinforcing material, the heat stabilizer, the color-correcting agent, the inorganic filler, the metal salt and other additives may be fed into the polycondensation reaction part 300 together with the prepolymer.

Next, the polycondensation reaction may be performed at about 180°C to about 280°C and about 10 Torr or less for about 1 hour to about 5 hours. For example, the polycondensation reaction may be performed at about 190°C to about 270°C, about 210°C to about 260°C or about 230°C to about 255°C under about 0.9 Torr or less, about 0.7 Torr or less, about 0.2 Torr to about 10 torr, about 0.2 Torr to about 0.9 Torr or about 0.2 Torr to about 0.6 Torr for about 1.5 hours to about 5 hours, about 2 hours to about 4.5 hours or about 2 hours to about 4 hours.

In addition, the polycondensation reaction may include first polycondensation and second polycondensation.

For example, the first polycondensation may be performed at about 260°C or less, about 250°C or less, about 215°C to about 250°C, about 215°C to about 245°C or about 230°C to about 245°C under about 1 torr to about 200 torr, about 2 Torr to about 100 torr, about 4 Torr to about 50 torr, about 5 Torr to about 45 Torr or about 8 Torr to about 32 Torr for about 0.5 hours to about 3.5 hours, about 0.5 hours to about 3.0 hours or about 0.5 hours to about 2.8 hours.

In addition, the second polycondensation may be performed at about 220°C to about 265°C, about 230°C to about 260°C or about 235°C to about 255°C under about 1 torr or less, about 0.8 Torr or less, about 0.6 Torr or less, about 0.1 Torr to about 1 torr, about 0.2 Torr to about 0.8 Torr or about 0.2 Torr to about 0.6 Torr for about 0.5 hours to about 4 hours, about 1 hour to about 3.5 hours or about 1.5 hours to about 3.5 hours.

In addition, before the polycondensation reaction, a titanium-based catalyst or a germanium-based catalyst may be further added to the prepolymer. In addition, before the polycondensation reaction, one or more selected from the group consisting of an additive such as silica, potassium or magnesium; an amine-based stabilizer such as trimethyl phosphate, triphenyl phosphate, trimethyl phosphine, phosphoric acid, phosphorous acid, or tetraethylenepentamine; and a polymerization catalyst such as antimony trioxide, antimony trioxide or tetrabutyl titanate may be further added to the prepolymer.

The number average molecular weight of the polymer may range from about 30000 g/mol or more. For example, the number average molecular weight of the polymer may range from about 33000 g/mol or more, about 35000 g/mol or more or about 40000 g/mol to about 90000 g/mol. When the number average molecular weight of the polymer satisfies the range, physical properties, impact resistance, durability and moldability may be further improved.

In addition, the second recovery part 520 recovers by-products such as water from the polycondensation reaction part 300. The second recovery part 520 may apply vacuum pressure to the polycondensation reaction part 300, and may recover by-products generated in the polycondensation reaction.

The second recovery part 520 may apply a vacuum pressure of about 0.1 Torr to about 1 torr to the inside of the polycondensation reaction part 300. The second recovery part 520 may apply a vacuum pressure of about 0.1 Torr to about 0.9 Torr to the inside of the polycondensation reaction part 300.

Next, the anti-hydrolysis agent and/or the chain extender are added to the polymer. Next, the polymer, the anti-hydrolysis agent and the chain extender are uniformly mixed and allowed to stand at about 200°C to about 260°C for about 1 minute to about 15 minutes. Accordingly, the polymer reacts with the anti-hydrolysis agent and/or the chain extender.

Alternatively, the anti-hydrolysis agent and/or the chain extender may be fed into the polycondensation reaction part 300 through a static mixer and reacted with the polymer. A reaction temperature of the anti-hydrolysis agent and/or the chain extender in the polycondensation reaction part 300 may range from about 200°C to about 260°C. In addition, a reaction time of the anti-hydrolysis agent and/or the chain extender in the polycondensation reaction part 300 may range from about 1 minute to about 15 minutes.

The chain extender may have the characteristics described above.

The anti-hydrolysis agent may have the characteristics described above.

Accordingly, the biodegradable polyester resin composition according to one embodiment may have appropriate hydrolysis and a high biodegradability degree.

Next, a pellet may be produced from the polymer.

Specifically, the pellet may be produced by cooling the polymer to about 15°C or less, about 10°C or less or about 6°C or less, and then cutting the cooled polymer. Alternatively, the polymer may be cut at about 40°C to about 60°C.

The cutting step may be performed using any pellet cutting machine used in the art without limitation, and the pellet may have various shapes. The pellet cutting method may include an underwater cutting method or a strand cutting method.

The pellet may be subjected to an additional post-treatment process. The pellet may be fed into the post-treatment part 400, and the post-treatment process may be performed.

The post-treatment process may be performed in the post-treatment part 400. The pellet is fed into the post-treatment part 400. Next, the post-treatment part 400 may melt and re-extrude the fed pellet by frictional heat. That is, the post-treatment part 400 may include an extruder such as a twin-screw extruder.

The temperature of the post-treatment process may range from about 230°C to about 270°C. The temperature of the post-treatment process may range from about 230°C to about 260°C. The temperature of the post-treatment process may range from about 240°C to about 265°C. The temperature of the post-treatment process may range from about 240°C to about 260°C.

The post-treatment process time may range from about 30 seconds to about 3 minutes. The post-treatment process time may range from about 50 seconds to about 2 minutes. The post-treatment process time may range from about 1 minute to about 2 minutes.

Next, A resin extruded by the extruder may be cooled, cut, and processed into post-treated pellets. That is, the resin extruded from the extruder may be reprocessed into a pellet through the cutting step described above.

Crystallinity of the pellet may be improved in the post-treatment process. In addition, the content of the residue included in the pellet may be adjusted in the post-treatment process. In particular, the content of an oligomer contained in the pellet may be controlled by the post-treatment process. The amount of residual solvent contained in the pellet may be controlled by the post-treatment process.

Accordingly, the post-treatment process may appropriately control the mechanical properties, biodegradability, UV resistance, optical properties, or hydrolysis resistance of the biodegradable polyester resin.

After the pellet is produced, the biodegradable polyester resin may be compounded with the heterogeneous biodegradable resin. In addition, at least one or more of the inorganic filler, the light stabilizer, the color-correcting agent and the other additives may be compounded with the biodegradable polyester resin and the heterogeneous biodegradable resin.

The compounding process may be as follows.

The biodegradable polyester resin and the heterogeneous biodegradable polyester resin are mixed with at least one or more of the inorganic filler, the heat stabilizer, the color-correcting agent, the metal salt or the other additives and fed into an extruder. The mixed biodegradable polyester resin composition is melted and mixed at about 120°C to about 260°C in the extruder. Next, the melt-mixed biodegradable polyester resin composition is extruded, cooled, cut, and re-pelletized. By this process, the biodegradable polyester resin composition according to one embodiment may be prepared by combining it with the heterogeneous biodegradable polyester resin.

Alternatively, the inorganic filler, the heat stabilizer, the color-correcting agent, the metal salt and the other additives may be added in the middle of the process of polymerizing the biodegradable polyester resin.

By the biodegradable polyester resin according to one embodiment, a biodegradable polyester film may be prepared.

The thickness of the biodegradable polyester film may range from about 5 μm to about 300 μm4. For example, the thickness of the biodegradable polyester film may range from about 5 μm to about 180 μm, about 5 μm to about 160 μm, about 10 μm to about 150 μm, about 15 μm to about 130 μm, about 20 μm to about 100 μm, about 25 μm to about 80 μm or about 25 μm to about 60 μm.

The biodegradable polyester film according to one embodiment may have substantially the same hydrolysis degree and biodegradability as the biodegradable polyester resin composition described above.

Meanwhile, the biodegradable polyester film may be prepared using the biodegradable polyester resin or a biodegradable polyester resin pellet.

Specifically, the method of preparing the biodegradable polyester film may include a step of preparing a biodegradable resin composition according to an example and a step of drying and melt extruding the biodegradable resin composition.

In the step of drying and melt extruding the biodegradable resin composition, the drying may be performed at about 60°C to about 100°C for about 2 hours to about 12 hours. Specifically, the drying may be performed at about 65°C to about 95°C, about 70°C to about 90°C or about 75°C to about 85°C for about 3 hours to about 12 hours or about 4 hours to about 10 hours. When drying conditions of a pellet are within the ranges, the quality of a produced biodegradable polyester film or molded article may be further improved.

In the drying and melt extruding step, the melt extruding may be performed at about 270°C or less. For example, the melt extruding may be performed at about 265°C or less, about 260°C or less, about 255°C or less, about 150°C to about 270°C, about 150°C to about 255°C or about 150°C to about 240°C. The melt extruding may be performed by a blown film process. The melt extruding may proceed in a T-die.

In addition, the film preparation process may be a calendering process.

Biodegradable polyester molded article

A biodegradable polyester molded article may be manufactured using the biodegradable polyester resin.

Specifically, the molded article may be manufactured by molding the biodegradable polyester resin composition in a method, such as extrusion or injection, known in the art, and the molded article may be an injection-molded article, an extrusion-molded article, a thin-film molded product, a blow molding or blow-molded article, 3D filament, an interior material for construction, or the like, but is not limited thereto.

For example, the molded article may be in the form of a film or sheet that can be used as an agricultural mulching film, disposable gloves, a disposable film, a disposable bag, a food packaging material, a volume-rate garbage bag, etc., and may be in the form of a fiber that can be used as woven, knitted, non-woven, or a rope. In addition, as shown in FIG. 2, the molded article may be in the form of a disposable container that can be used as a container for packaging food such as a lunch box. In addition, the molded article may be a molded article in various forms such as a disposable

straw, a cutlery (spoon), a food plate, or a fork.

In particular, since the molded article may be formed from the biodegradable polyester resin capable of improving physical properties such as shock absorption energy and hardness, in particular, impact resistance and durability, it may exhibit excellent properties when applied to packaging materials for products stored and transported at low temperatures, interior materials for automobiles requiring durability, garbage bags, mulching films, and disposable products.

The physical properties of the biodegradable film and the biodegradable molded article may be measured in a manner similar to those of the biodegradable polyester resin composition according to one embodiment.

The biodegradability of the biodegradable polyester resin composition according to one embodiment may be measured by the following method.

To measure the biodegradability, the biodegradable polyester resin composition according to one embodiment was mixed with compost, and a biodegradation acceleration test was conducted at 60°C and a humidity 90%. After a certain period, the number average molecular weight of the biodegradable polyester resin composition according to one embodiment was measured using gel permeation chromatography (GPC). A biodegradability was derived by dividing a difference between an initial number average molecular weight and a number average molecular weight after biodegradation for a certain period by the initial number average molecular weight.

The biodegradability may be represented by Equation 10 below:

[Equation 10]

$$\text{Biodegradability (\%)} = \frac{\text{Initial number average molecular weight - number average molecular weight after biodegradation}}{\text{Initial number average molecular weight}} \times 100$$

Here, the biodegradable polyester resin composition according to one embodiment is mixed with compost and subjected to a biodegradation acceleration test at 60°C and a humidity of 90% for a certain period. An initial number average molecular weight of the biodegradable polyester resin composition before performing the biodegradability acceleration test and a number average molecular weight after biodegradation of the biodegradable polyester resin composition subjected to the biodegradation acceleration test for a certain period are measured by gel permeation chromatography (GPC).

The biodegradability was derived by dividing a difference between the initial number average molecular weight and the number average molecular weight after biodegradation for a certain period by an initial number average molecular weight.

In addition, the compost may include about 40 wt% of pig manure, about 15 wt% of chicken manure, about 37 wt% of sawdust, about 5 wt% of zeolite and about 3 wt% of a microbial agent.

In addition, the compost may be Jisaengto (by-product fertilizer grade 1 compost) manufactured by Taeheung F&G.

In addition, when measuring the biodegradability, the biodegradable polyester resin composition according to one embodiment is manufactured as a sheet having a thickness of about 300 ,um. Next, the manufactured sheet is cut into a size of about 30 mm × 30 mm to produce flakes. The flakes are mixed with the compost, and the biodegradation acceleration test is performed.

In the biodegradable polyester resin composition according to one embodiment, a biodegradability after one week may range from about 40% to about 70%. In the biodegradable polyester resin composition according to one embodiment, the biodegradability after one week may range from about 45% to about 65%. In the biodegradable polyester resin composition according to one embodiment, the biodegradability after one week may range from about 47% to about 63%. In the biodegradable polyester resin composition according to one embodiment, the biodegradability after one week may range from about 49% to about 62%.

In the biodegradable polyester resin composition according to one embodiment, the biodegradability after two weeks may range from about 50% to about 70%. In the biodegradable polyester resin composition according to one embodiment, the biodegradability after two weeks may range from about 55% to about 68%.

In the biodegradable polyester resin composition according to one embodiment, a biodegradability after three weeks may range from about 63% to about 75%. In the biodegradable polyester resin composition according to one embodiment, the biodegradability after three weeks may range from about 63% to about 73%.

In the biodegradable polyester resin composition according to one embodiment, a biodegradability after four weeks may range from about 73% to about 85%. In the biodegradable polyester resin composition according to one embodiment, the biodegradability after four weeks may be 75% to 82%.

In the biodegradable polyester resin composition according to one embodiment, a biodegradability after six weeks may range from about 80% to about 90%. In the biodegradable polyester resin composition according to one

embodiment, the biodegradability after six weeks may range from about 82% to about 88%.

In the biodegradable polyester resin composition according to one embodiment, a biodegradability after nine weeks may range from about 85% or more. In the biodegradable polyester resin composition according to one embodiment, the biodegradability after nine weeks may range from about 87% or more. In the biodegradable polyester resin composition according to one embodiment, the biodegradability after nine weeks may range from about 88% or more. In the biodegradable polyester resin composition according to one embodiment, the biodegradability after nine weeks may range from about 89% or more. In the biodegradable polyester resin composition according to one embodiment, the biodegradability after nine weeks may range from about 90% or more.

Since the biodegradable polyester resin composition according to one embodiment has a biodegradability and biodegradability increase rate as described above, it may have appropriate durability in real life and a high biodegradability degree when discarded after use.

The hydrolysis degree of the biodegradable polyester resin composition according to one embodiment may be measured by the following method.

To measure the hydrolysis degree, the biodegradable polyester resin composition according to an example is immersed in 80°C water (100% RH), and a hydrolysis acceleration test is performed. After a certain period, the number average molecular weight of the biodegradable polyester resin composition according to one embodiment was measured using gel permeation chromatography (GPC). A hydrolysis degree was derived by dividing a difference between an initial number average molecular weight and a number average molecular weight after hydrolysis for a certain period by the initial number average molecular weight.

The hydrolysis degree may be calculated by Equation 11 below.

[Equation 11]

$$\text{Hydrolysis degree (\%)} = \frac{\text{Initial number average molecular weight} - \text{Number average molecular weight after hydrolysis}}{\text{Initial number average molecular weight}} \times 100$$

Here, the biodegradable polyester resin composition according to one embodiment is immersed in 80°C water, and then subjected to a hydrolysis acceleration test for a certain period. An initial number average molecular weight of the biodegradable polyester resin composition before performing the hydrolysis acceleration test and a number average molecular weight after hydrolysis of the biodegradable polyester resin composition subjected to the hydrolysis acceleration test for a certain period are measured by gel permeation chromatography (GPC).

The hydrolysis degree was derived by dividing a difference between the initial number average molecular weight and the number average molecular weight after hydrolysis for a certain period by an initial number average molecular weight.

In addition, when measuring the hydrolysis degree, the biodegradable polyester resin composition according to one embodiment is manufactured to a sheet having a thickness of about 300 μm. Next, the manufactured sheet is cut into a size of about 30 mm×30 mm to produce flakes. The flakes may be immersed in the hot water, and the hydrolysis acceleration test may be performed.

In the biodegradable polyester resin composition according to one embodiment, a hydrolysis degree after one week may range from about 40% to about 65%. In the biodegradable polyester resin composition according to one embodiment, the hydrolysis degree after one week may range from about 45% to about 63%.

In the biodegradable polyester resin composition according to one embodiment, a hydrolysis degree after two weeks may range from about 80% to about 93%. In the biodegradable polyester resin composition according to one embodiment, the hydrolysis degree after two weeks may range from about 85% to about 92%.

In the biodegradable polyester resin composition according to one embodiment, a hydrolysis degree after three weeks may range from about 90% to about 97%. In the biodegradable polyester resin composition according to one embodiment, a hydrolysis degree after three weeks may range from about 91% to about 96%.

In the biodegradable polyester resin composition according to one embodiment, a hydrolysis degree after four weeks may range from about 92% to about 99%. In the biodegradable polyester resin composition according to one embodiment, a hydrolysis degree after four weeks may range from about 93% to about 97%.

In the biodegradable polyester resin composition according to one embodiment, a hydrolysis degree after six weeks may range from about 94%or more. In the biodegradable polyester resin composition according to one embodiment, a hydrolysis degree after six weeks may range from about 95%or more.

In the biodegradable polyester resin composition according to one embodiment, a hydrolysis degree after nine weeks may range from about 95%or more. In the biodegradable polyester resin composition according to one embodiment, a hydrolysis degree after nine weeks may range from about 96%or more.

In the biodegradable polyester resin composition according to one embodiment, the hydrolysis degree increase rate from 1 week to 2 weeks may range from about 25% / week to about 50% / week. In the biodegradable polyester resin composition according to one embodiment, the hydrolysis degree increase rate from 1 week to 2 weeks may range from about 29% / week to about 50% / week.

In the biodegradable polyester resin composition according to one embodiment, the hydrolysis degree increase rate from 1 week to 2 weeks may range from about 30% / week to about 45% / week.

The biodegradable polyester resin composition according to one embodiment may have a wet hardness reduction rate. The wet hardness reduction rate is a value obtained by dividing a difference between an initial hardness before immersion and a wet hardness after immersing the biodegradable polyester resin composition in water at a predetermined temperature for a predetermined time by the initial hardness.

The wet hardness reduction rate may be derived by Equation 12 below:

[Equation 12]

$$\text{Wet hardness reduction rate (\%)} = \frac{\text{Initial hardness - Wet hardness after immersion}}{\text{Initial hardness}} \times 100$$

The wet hardness reduction rate after immersing at 30°C for 1 hour may be 12% to 30%. The wet hardness reduction rate after immersing at 30°C for 1 hour may be 12% to 25%. The wet hardness reduction rate after immersing at 30°C for 1 hour may be 14% to 25%. The wet hardness reduction rate after immersing at 30°C for 1 hour may be 15% to 23%.

The wet hardness reduction rate after immersing at 30°C for 1 hour may be measured by a measurement method below. First, the biodegradable polyester resin composition is processed to manufacture a polyester block having a thickness of about 2.5 mm. The initial hardness of the polyester block is measured before immersion, and the wet hardness of the polyester block immediately after immersing the polyester block in water at about 30°C for about 1 hour is measured. Next, the wet hardness reduction rate after immersing at 30°C for 1 hour may be derived by Equation 12.

The biodegradable polyester resin composition may be dried at about 80 °C for about 20 minutes, placed in a stainless steel mold, and compressed at about 210 °C under a pressure of about 10 MPa for about 5 minutes, thereby producing a polyester block having a thickness of about 2.5 mm.

The initial hardness may range from about 30 to about 45 as Shore D hardness. The initial hardness may range from about 33 to about 43 as Shore D hardness. The initial hardness may range from about 35 to about 41 as Shore D hardness.

A Shore D hardness as a wet hardness after immersing at 30 °C for 1 hour may range fromabout 25 to about 40. The Shore D hardness as a wet hardness after immersing at 30 °C for 1 hour may range from about 27 to about 37. The Shore D hardness as a wet hardness after immersing at 30 °C for 1 hour may range from about 30 to about 35.

A wet hardness reduction rate after immersing at 30 °C for 0.5 hours may range from about 12% to about 30%. The wet hardness reduction rate after immersing at 30 °C for 0.5 hours may range from about 12% to about 25%. The wet hardness reduction rate after immersing at 30 °C for 0.5 hours may range from about 14% to about 25%. The wet hardness reduction rate after immersing at 30 °C for 0.5 hours may range from about 15% to about 23%.

The wet hardness after immersing at 30 °C for 0.5 hours may range from about 25 to about 40 as Shore D hardness. The wet hardness after immersing at 30 °C for 0.5 hours may range from about 27 to about 37 as Shore D hardness. The wet hardness after immersing at 30 °C for 0.5 hours may range from about 30 to about 35 as Shore D hardness.

A deviation between a wet hardness reduction rate after immersing at 30 °C for 1 hour and a wet hardness reduction rate after immersing at 30 °C for 0.5 hours may range from about 10% or less. The deviation between a wet hardness reduction rate after immersing at 30 °C for 1 hour and a wet hardness reduction rate after immersing at 30 °C for 0.5 hours is a value obtained by dividing an absolute value of a difference between a wet hardness after immersing at 30 °C for 1 hour and a wet hardness after immersing at 30 °C for 0.5 hours by the initial hardness. The deviation between a wet hardness reduction rate after immersing at 30 °C for 1 hour and a wet hardness reduction rate after immersing at 30 °C for 0.5 hours may range from about 7% or less. The deviation between a wet hardness reduction rate after immersing at 30 °C for 1 hour and a wet hardness reduction rate after immersing at 30 °C for 0.5 hours may range from about 5% or less.

A wet hardness reduction rate after immersing at 30 °C for 18 hours may range from about 12% to about 30%. The wet hardness reduction rate after immersing at 30 °C for 18 hours may range from about 12% to about 25%. The wet hardness reduction rate after immersing at 30°C for 18 hours may range from about 14% to about 25%. The wet hardness reduction rate after immersing at 30 °C for 18 hours may range from about 15% to about 23%.

The Shore D hardness as a wet hardness after immersing at 30 °C for 18 hours may range from about 25 to about 40. The Shore D hardness as a wet hardness after immersing at 30°C for 18 hours may range from about 27 to about 37. The Shore D hardness as a wet hardness after immersing at 30°C for 18 hours may range from about 30 to about 35.

A deviation between a wet hardness reduction rate after immersing at 30 °C for 1 hour and a wet hardness reduction rate after immersing at 30 °C for 18 hours may range from about 10% or less. The deviation between a wet hardness reduction rate after immersing at 30 °C for 1 hour and a wet hardness reduction rate after immersing at 30 °C for 18 hours may range from about 7% or less. The deviation between a wet hardness reduction rate after immersing at 30 °C for 1 hour and a wet hardness reduction rate after immersing at 30 °C for 18 hours may range from about 5% or less.

A wet hardness reduction rate after immersing at 30 °C for 24 hours may range from about 13% to about 31%. The wet hardness reduction rate after immersing at 30 °C for about 24 hours may range from about 13% to about 26%. The wet hardness reduction rate after immersing at 30 °C for about 24 hours may range from about 15% to about 26%. The wet hardness reduction rate after immersing at 30 °C for about 24 hours may range from about 16% to about 24%.

A Shore D hardness as a wet hardness after immersing at 30 °C for 24 hours may range from about 24 to about 39. The Shore D hardness as a wet hardness after immersing at 30 °C for 24 hours may range from about 26 to about 36. The Shore D hardness as a wet hardness after immersing at 30 °C for 24 hours may range from about 29 to about 34.

A deviation of a wet hardness reduction rate after immersing at 30 °C for 1 hour between a wet hardness reduction rate after immersing at 30 °C for 24 hours may range from about 10% or less. The deviation between the wet hardness reduction rate after immersing at 30 °C for 1 hour and the wet hardness reduction rate after immersing at 30 °C for 24 hours may range from about 7% or less. The deviation between the wet hardness reduction rate after immersing at 30°C for 1 hour and the wet hardness reduction rate after immersing at 30 °C for 24 hours may range from about 5% or less.

A wet hardness reduction rate after immersing at 50 °C for 1 hour may range from about 13% to about 31%. The wet hardness reduction rate after immersing at 50°C for 1 hour may range from about 13% to about 26%. The wet hardness reduction rate after immersing at 50 °C for 1 hour may range from about 14% to about 26%. The wet hardness reduction rate after immersing at 50 °C for 1 hour may range from about 15% to about 24%.

A Shore D hardness as the wet hardness after immersing at 50 °C for 1 hour may range from about 24 to about 40. The Shore D hardness as the wet hardness after immersing at 50 °C for 1 hour may range from about 26 to about 37. The Shore D hardness as the wet hardness after immersing at 50 °C for 1 hour may range from about 29 to about 35.

A deviation between a wet hardness reduction rate after immersing at 30 °C for 1 hour and a wet hardness reduction rate after immersing at 50 °C for 1 hour may range from about 10% or less. The deviation between a wet hardness reduction rate after immersing at 30 °C for 1 hour and a wet hardness reduction rate after immersing at 50 °C for 1 hour may range from about 7% or less. The deviation between a wet hardness reduction rate after immersing at 30 °C for 1 hour and a wet hardness reduction rate after immersing at 50 °C for 1 hour may range from about 5% or less.

A wet hardness reduction rate after immersing at 70 °C for 1 hour may range from about 14% to about 31%. The wet hardness reduction rate after immersing at 70 °C for 1 hour may range from about 14% to about 26%. The wet hardness reduction rate after immersing at 70 °C for 1 hour may range fromabout 15% to about 26%. The wet hardness reduction rate after immersing at 70 °C for 1 hour may range from about 15% to about 24%.

A Shore D hardness as a wet hardness after immersing at 70 °C for 1 hour may range from about 24 to about 39. The Shore D hardness as a wet hardness after immersing at 70 °C for 1 hour may range from about 25 to about 36. The Shore D hardness as a wet hardness after immersing at 70 °C for 1 hour may range from about 28 to about 35.

A deviation between a wet hardness reduction rate after immersing at 30 °C for 1 hour and a wet hardness reduction rate after immersing at 70 °C for 1 hour may range from about 10% or less. The deviation between a wet hardness reduction rate after immersing at 30 °C for 1 hour and a wet hardness reduction rate after immersing at 70 °C for 1 hour may range from about 7% or less. The deviation between a wet hardness reduction rate after immersing at 30 °C for 1 hour and a wet hardness reduction rate after immersing at 70 °C for 1 hour may range from about 5% or less.

The biodegradable polyester resin composition according to one embodiment has an appropriate wet hardness reduction rate as described above. Accordingly, the biodegradable polyester resin composition according to one embodiment may appropriately retain moisture in a high-humidity environment or in water such as the sea when discarded. Accordingly, the biodegradable polyester resin composition according to this embodiment may be degraded in a high-humidity environment, especially in water.

In addition, the biodegradable polyester resin composition according to one embodiment may have appropriate initial hydrolysis resistance while having an appropriate wet hardness reduction rate. Accordingly, the biodegradable polyester resin composition according to this embodiment may be biodegraded when discarded after use while maintaining appropriate mechanical and chemical properties during the period of use.

In addition, the biodegradable polyester resin composition according to another embodiment may be biodegraded in high-humidity soil.

In addition, the biodegradable polyester resin composition according to another embodiment is discarded in

an aquatic environment such as the sea, river or lake, and moisture and inorganic ions can penetrate into the biodegradable polyester resin composition according to one embodiment. Accordingly, the biodegradable polyester resin composition according to this embodiment may be easily biodegraded even in water such as ocean, river or lake.

The biodegradable polyester resin composition according to one embodiment includes a polyester resin having an appropriate alternating ratio. The content of a diol bonded between the aromatic dicarboxylic acid and the aliphatic dicarboxylic acid may be appropriate.

Accordingly, the biodegradable polyester resin may have a structure wherein the aromatic dicarboxylic acid and the aliphatic dicarboxylic acid are appropriately alternately disposed. Accordingly, the biodegradable polyester resin may have improved crystal properties, and the biodegradable polyester resin composition according to this embodiment may have improved thermal and mechanical properties.

In addition, since the biodegradable polyester resin has a structure wherein the aromatic dicarboxylic acid and the aliphatic dicarboxylic acid are appropriately alternately disposed, aromatic and aliphatic dicarboxylic acids in the molecule of the biodegradable polyester resin may be appropriately crossed. Accordingly, the biodegradable polyester resin composition according to this embodiment may have appropriate hydrolysis, improved biodegradability and an appropriate wet hardness reduction rate.

In addition, since the biodegradable polyester resin has the above-described molecular structure, it may have appropriate moisture resistance and solvent resistance. Accordingly, the biodegradable polyester resin composition according to this embodiment may have improved printability.

Therefore, the biodegradable polyester resin composition according to one embodiment may be biodegraded after use while having improved physical properties during actual use.

The biodegradable polyester resin composition according to one embodiment includes a weight swelling rate. The weight swelling rate may be obtained by dividing a difference between a weight after immersing in an organic solvent and an initial weight by the initial weight. When measuring the weight swelling rate, the biodegradable polyester resin composition according to this embodiment may be processed into the above-described biodegradable polyester sheet shape and immersed in the solvent. In addition, when measuring the weight after the immersion, a solvent remaining on the surface of the biodegradable polyester sheet is removed. In addition, when measuring the weight after the immersion, the biodegradable polyester sheet may be immersed in a room-temperature solvent.

The weight swelling rate may be calculated by Equation 13 below:

[Equation 13]

$$\text{Weight swelling rate} = \frac{\text{Weight after immersion} - \text{Initial weight}}{\text{Initial weight}} \text{ X } 100$$

The biodegradable polyester resin composition according to one embodiment may have a weight swelling rate after being immersed in acetone for 2 hours.

In the biodegradable polyester resin composition according to this embodiment, the weight swelling rate after being immersed in acetone for 2 hours may be 18% or less. In the biodegradable polyester resin composition according to another embodiment, the weight swelling rate after being immersed in acetone for 2 hours may be 15% or less. In the biodegradable polyester resin composition according to still another embodiment, the weight swelling rate after being immersed in acetone for 2 hours may be 12% or less. In the biodegradable polyester resin composition according to yet another embodiment, the weight swelling rate after being immersed in acetone for 2 hours may be 10% or less. In the biodegradable polyester resin composition according to a further embodiment, a minimum value of the weight swelling rate after being immersed in acetone for 2 hours may range from about 0.1%, about 1%, about 1.5% or about 2.5%. In the biodegradable polyester resin composition according to a still further embodiment, the weight swelling rate after being immersed in acetone for 2 hours may range from about 1% to about 18%, about 2% to about 15%, about 3% to about 15% or about 3.2% to about 15%.

The biodegradable polyester resin composition according to one embodiment may have a weight swelling rate after being immersed in acetone for 18 hours.

In the biodegradable polyester resin composition according to this embodiment, the weight swelling rate after being immersed in acetone for 18 hours may be 18% or less. In the biodegradable polyester resin composition according to another embodiment, the weight swelling rate after being immersed in acetone for 18 hours may be 15% or less. In the biodegradable polyester resin composition according to yet another embodiment, the weight swelling rate after being immersed in acetone for 18 hours may be 12% or less. In the biodegradable polyester resin composition according to still another embodiment, the weight swelling rate after being immersed in acetone for 18 hours may be 10% or less. In the biodegradable polyester resin composition according to a further embodiment, a minimum value of the weight swelling

rate after being immersed in acetone for 18 hours may range from about 0.1%, about 1%, about 1.5% or about 2.5%. In the biodegradable polyester resin composition according to a still further embodiment, the weight swelling rate after being immersed in acetone for 18 hours may range from about 1% to about 18%, about 2% to about 15%, about 3% to about 15% or about 3.2% to about 15%.

The biodegradable polyester resin composition according to one embodiment may have a weight swelling rate after being immersed in acetone for 24 hours.

In the biodegradable polyester resin composition according to this embodiment, the weight swelling rate after being immersed in acetone for 24 hours may be 18% or less. In the biodegradable polyester resin composition according to another embodiment, the weight swelling rate after being immersed in acetone for 24 hours may be 15% or less. In the biodegradable polyester resin composition according to yet another embodiment, the weight swelling rate after being immersed in acetone for 24 hours may be 12% or less. In the biodegradable polyester resin composition according to still another embodiment, the weight swelling rate after being immersed in acetone for 24 hours may be 10% or less. In the biodegradable polyester resin composition according to a further embodiment, a minimum value of the weight swelling rate after being immersed in acetone for 24 hours may range from about 0.1%, about 1%, about 1.5% or about 2.5%. In the biodegradable polyester resin composition according to a still further embodiment, the weight swelling rate after being immersed in acetone for 24 hours may range from about 1% to about 18%, about 2% to about 15%, about 3% to about 15% or about 3.2% to about 15%.

The biodegradable polyester resin composition according to one embodiment may have a weight swelling rate after being immersed in acetonitrile for 2 hours.

In the biodegradable polyester resin composition according to this embodiment, the weight swelling rate after being immersed in acetonitrile for 2 hours may be 20% or less. In the biodegradable polyester resin composition according to another embodiment, the weight swelling rate after being immersed in acetonitrile for 2 hours may be 18% or less. In the biodegradable polyester resin composition according to yet another embodiment, the weight swelling rate after being immersed in acetonitrile for 2 hours may be 15% or less. In the biodegradable polyester resin composition according to still another embodiment, the weight swelling rate after being immersed in acetonitrile for 2 hours may be 13% or less. A minimum value of the weight swelling rate after being immersed in acetonitrile for 2 hours may range from about 0.1%, about 2%, about 3.5% or about 4.5%. In the biodegradable polyester resin composition according to a further embodiment, the weight swelling rate after being immersed in acetonitrile for 2 hours may range from about 1% to about 20%, about 4.5% to about 20%, about 6.5% to about 20% or about 7% to about 15%.

The biodegradable polyester resin composition according to one embodiment may have a weight swelling rate after being immersed in acetonitrile for 18 hours.

In the biodegradable polyester resin composition according to this embodiment, the weight swelling rate after being immersed in acetonitrile for 18 hours may be 20% or less. In the biodegradable polyester resin composition according to another embodiment, the weight swelling rate after being immersed in acetonitrile for 18 hours may be 18% or less. In the biodegradable polyester resin composition according to yet another embodiment, the weight swelling rate after being immersed in acetonitrile for 18 hours may be 15% or less. In the biodegradable polyester resin composition according to still another embodiment, the weight swelling rate after being immersed in acetonitrile for 18 hours may be 13% or less. A minimum value of the weight swelling rate after being immersed in acetonitrile for 18 hours may range from about 0.1%, about 4%, about 5.5% or about 6.5%. In the biodegradable polyester resin composition according to a further embodiment, the weight swelling rate after being immersed in acetonitrile for 18 hours may range from about 1% to about 20%, about 5.5% to about 20%, about 6.5% to about 20% or about 7% to about 15%.

The biodegradable polyester resin composition according to onr embodiment may have a weight swelling rate after being immersed in acetonitrile for 24 hours.

In the biodegradable polyester resin composition according to this embodiment, the weight swelling rate after being immersed in acetonitrile for 24 hours may be 20% or less. In the biodegradable polyester resin composition according to another embodiment, the weight swelling rate after being immersed in acetonitrile for 24 hours may be 18% or less. In the biodegradable polyester resin composition according to yet another embodiment, the weight swelling rate after being immersed in acetonitrile for 24 hours may be 15% or less. In the biodegradable polyester resin composition according to still another embodiment, the weight swelling rate after being immersed in acetonitrile for 24 hours may be 13% or less. A minimum value of the weight swelling rate after being immersed in acetonitrile for 24 hours may range from about 0.1%, about 4%, about 6.5% or about 7%. In the biodegradable polyester resin composition according to a further embodiment, the weight swelling rate after being immersed in acetonitrile for 24 hours may range from about 1% to about 20%, about 6.5% to about 20%, about 7% to about 20% or about 7.5% to about 15%.

In addition, the biodegradable polyester resin composition according to one embodiment includes a volume swelling rate. The volume swelling rate may be obtained by dividing a difference between a volume after immersing in an organic solvent and an initial volume by the initial volume. When measuring the volume swelling rate, the biodegradable polyester resin composition according to this embodiment may be processed into the above-described biodegradable polyester sheet shape and immersed in the solvent. In addition, when measuring the volume after the immersion, a

solvent remaining on the surface of the biodegradable polyester sheet is removed. In addition, when measuring the volume after the immersion, the biodegradable polyester sheet may be immersed in a room-temperature solvent.

The volume swelling rate may be derived by Equation 14 below:

[Equation 14]

$$\text{Volume swelling rate} = \frac{\text{Volume after immersion} - \text{Initial volume}}{\text{Initial volume}} \times 100$$

The biodegradable polyester resin composition according to one embodiment may have a volume swelling rate after being immersed in acetone for 2 hours.

In the biodegradable polyester resin composition according to thisembodiment, the volume swelling rate after being immersed in acetone for 2 hours may be 30% or less. In the biodegradable polyester resin composition according to another embodiment, the volume swelling rate after being immersed in acetone for 2 hours may be 25% or less. In the biodegradable polyester resin composition according to yet another embodiment, the volume swelling rate after being immersed in acetone for 2 hours may be 20% or less. In the biodegradable polyester resin composition according to still another embodiment, the volume swelling rate after being immersed in acetone for 2 hours may be 18% or less. A minimum value of the volume swelling rate after being immersed in acetone for 2 hours may range from about 5%, about 10%, about 11% or about 12%. In the biodegradable polyester resin composition according to a further embodiment, the volume swelling rate after being immersed in acetone for 2 hours may range from about 5% to about 30%, about 11% to about 30%, about 12% to about 30% or about 13% to about 20%.

The biodegradable polyester resin composition according to one embodiment may have a volume swelling rate after being immersed in acetone for 18 hours.

In the biodegradable polyester resin composition according to this embodiment, the volume swelling rate after being immersed in acetone for 18 hours may be 30% or less. In the biodegradable polyester resin composition according to another embodiment, the volume swelling rate after being immersed in acetone for 18 hours may be 25% or less. In the biodegradable polyester resin composition according to yet another embodiment, the volume swelling rate after being immersed in acetone for 18 hours may be 20% or less. In the biodegradable polyester resin composition according to still another embodiment, the volume swelling rate after being immersed in acetone for 18 hours may be 18% or less. In the biodegradable polyester resin composition according to a further embodiment, the volume swelling rate after being immersed in acetone for 18 hours may be 18% or less. A minimum value of the volume swelling rate after being immersed in acetone for 18 hours may range from about 5%, about 12%, about 13% or about 14%. In the biodegradable polyester resin composition according to still a further embodiment, the volume swelling rate after being immersed in acetone for 18 hours may range from about 5% to about 30%, about 12% to about 30%, about 13% to about 30% or about 14% to about 18%.

The biodegradable polyester resin composition according to one embodiment may have a volume swelling rate after being immersed in acetone for 24 hours.

In the biodegradable polyester resin composition according to this embodiment, the volume swelling rate after being immersed in acetone for 24 hours may be 30% or less. In the biodegradable polyester resin composition according to another embodiment, the volume swelling rate after being immersed in acetone for 24 hours may be 25% or less. In the biodegradable polyester resin composition according to yet another embodiment, the volume swelling rate after being immersed in acetone for 24 hours may be 20% or less. In the biodegradable polyester resin composition according to still another embodiment, the volume swelling rate after being immersed in acetone for 24 hours may be 18% or less. A minimum value of the volume swelling rate after being immersed in acetone for 24 hours may range from about 5%, about 12%, about 13% or about 14%. In the biodegradable polyester resin composition according to a further embodiment, the volume swelling rate after being immersed in acetone for 24 hours may range from about 5% to about 30%, about 12% to about 30%, about 13% to about 30% or about 14% to about 25%.

The biodegradable polyester resin composition according to one embodiment may have a volume swelling rate after being immersed in acetonitrile for 2 hours.

In the biodegradable polyester resin composition according to this embodiment, the volume swelling rate after being immersed in acetonitrile for 2 hours may be 30% or less. In the biodegradable polyester resin composition according to another embodiment, the volume swelling rate after being immersed in acetonitrile for 2 hours may be 25% or less. In the biodegradable polyester resin composition according to yet another embodiment, the volume swelling rate after being immersed in acetonitrile for 2 hours may be 23% or less. In the biodegradable polyester resin composition according to still another embodiment, the volume swelling rate after being immersed in acetonitrile for 2 hours may be 20% or less. A minimum value of the volume swelling rate after being immersed in acetonitrile for 2 hours may range from about

5%, about 12%, about 13% or about 14%. In the biodegradable polyester resin composition according to a further embodiment, the volume swelling rate after being immersed in acetonitrile for 2 hours may range fromabout 5% to about 30%, about 12% to about 30%, about 13% to about 30% or about 14% to about 25%.

The biodegradable polyester resin composition according to one embodiment may have a volume swelling rate after being immersed in acetonitrile for 18 hours.

In the biodegradable polyester resin composition according to this embodiment, the volume swelling rate after being immersed in acetonitrile for 18 hours may be 30% or less. In the biodegradable polyester resin composition according to another embodiment, the volume swelling rate after being immersed in acetonitrile for 18 hours may be 25% or less. In the biodegradable polyester resin composition according to yet another embodiment, the volume swelling rate after being immersed in acetonitrile for 18 hours may be 23% or less. In the biodegradable polyester resin composition according to still another embodiment, the volume swelling rate after being immersed in acetonitrile for 18 hours may be 20% or less. A minimum value of the volume swelling rate after being immersed in acetonitrile for 18 hours may range from about 5%, about 12%, about 13% or about 14%. In the biodegradable polyester resin composition according to a further embodiment, the volume swelling rate after being immersed in acetonitrile for 18 hours may range fromabout 5% to about 30%, about 12% to about 30%, about 13% to about 30% or about 14% to about 25%.

The biodegradable polyester resin composition according to one embodiment may have a volume swelling rate after being immersed in acetonitrile for 24 hours.

In the biodegradable polyester resin composition according to this embodiment, the volume swelling rate after being immersed in acetonitrile for 24 hours may be 30% or less. In the biodegradable polyester resin composition according to another embodiment, the volume swelling rate after being immersed in acetonitrile for 24 hours may be 25% or less. In the biodegradable polyester resin composition according to yet another embodiment, the volume swelling rate after being immersed in acetonitrile for 24 hours may be 23% or less. In the biodegradable polyester resin composition according to still another embodiment, the volume swelling rate after being immersed in acetonitrile for 24 hours may be 20% or less. A minimum value of the volume swelling rate after being immersed in acetonitrile for 24 hours may range from about 5%, about 12%, about 13% or about 14%. In the biodegradable polyester resin composition according to a further embodiment, the volume swelling rate after being immersed in acetonitrile for 24 hours may range from about 5% to about 25%, about 12% to about 28%, about 13% to about 28% or about 14% to about 25%.

The biodegradable polyester resin composition according to one embodiment has an appropriate low weight swelling rate and volume swelling rate, as described above, in an organic solvent. The biodegradable polyester resin composition according to another embodiment may have a relatively low swelling rate in an organic solvent such as acetone or acetonitrile.

Accordingly, the biodegradable polyester resin composition according to one embodiment may have high solvent resistance. Accordingly, even when exposed to an organic solvent or the like, improved mechanical properties may be maintained.

In addition, the biodegradable polyester resin composition according to one embodiment may have appropriate initial hydrolysis resistance while having an appropriately low swelling rate. Accordingly, the biodegradable polyester resin composition according to one embodiment may be biodegraded when discarded after use while maintaining appropriate mechanical and chemical properties during the period of use.

In addition, the acid value of the biodegradable polyester resin composition according to another embodiment may range from about 0.01 mg KOH/g to about 3 mg KOH/g. The acid value of the biodegradable polyester resin composition according to another embodiment may range from about 0.5 mg KOH/g to about 2.5 mg KOH/g. The acid value of the biodegradable polyester resin composition according to yet another embodiment may range from about 0.5 mg KOH/g to about 2.3 mg KOH/g.

Since the biodegradable polyester resin composition according to this embodiment has an acid value within the ranges above, it may have hydrolysis and biodegradability characteristics as described above.

In addition, the biodegradable polyester resin composition according to one embodiment may include a nitrogen element. The nitrogen element may be derived from the metal salt and/or the chain extender, etc. The content of the nitrogen element may range fromabout 0.1 ppm to about 500 ppm based on the biodegradable polyester resin composition according to another embodiment. The content of the nitrogen element may range fromabout 1 ppm to about 400 ppm based on the biodegradable polyester resin composition according to yet another embodiment. The content of the nitrogen element may range from about 1 ppm to about 300 ppm based on the biodegradable polyester resin composition according to still another embodiment The content of the nitrogen element may range fromabout 1 ppm to about 100 ppm based on the biodegradable polyester resin composition according to a further embodiment.

In addition, the biodegradable polyester resin composition according to one embodiment may include a metal element. The metal element may be derived from a metal salt. The content of the metal element may range from about 0.1 ppm to about 100 ppm based on the biodegradable polyester resin composition according to another embodiment. The content of the metal element may range from about 0.5 ppm to about 90 ppm based on the biodegradable polyester resin composition according to yet another embodiment. The content of the metal element may range from about 1 ppm

to about 80 ppm based on the biodegradable polyester resin composition according to still another embodiment. The content of the metal element may range from about 1 ppm to about 50 ppm based on the biodegradable polyester resin composition according to a further embodiment.

Since the content of the nitrogen element and/or the metal element is as described above, the biodegradable polyester resin composition according to one embodiment may have appropriate hydrolysis, appropriate biodegradability, appropriate wet hardness, an appropriate weight swelling rate, an appropriate volume swelling rate and appropriate surface properties.

In addition, the biodegradable polyester resin composition according to one embodiment may have properties of surface tension, water contact angle, diiodomethane contact angle, surface free energy, dispersity, and polarity as illustrated below.

The surface tension, the water contact angle, the diiodomethane contact angle, the surface free energy, the dispersity and the polarity may be measured on the surface of the polyester sheet.

In the biodegradable polyester resin composition according to one embodiment, the surface tension may range from about 30 dyne to about 55 dyne. In the biodegradable polyester resin composition according to another embodiment, the surface tension may range from about 35 dyne to about 50 dyne.

In the biodegradable polyester resin composition according to one embodiment, the water contact angle may range from about 60° to about 90°. In the biodegradable polyester resin composition according to another embodiment, the water contact angle may range from about 65° to about 85°. In the biodegradable polyester resin composition according to yet another embodiment, the water contact angle may range from about 67° to about 80°.

In the biodegradable polyester resin composition according to one embodiment, the diiodomethane contact angle may range from about 20° to about 40°. In the biodegradable polyester resin composition according to another embodiment, the diiodomethane contact angle may range fromabout 20° to about 35°.In one embodiment, the surface free energy may range from about 40 mN/m to about 60 mN/m. In the biodegradable polyester resin composition according to another embodiment, the surface free energy may range fromabout 42 mN/m to about 55 mN/m.

In the biodegradable polyester resin composition according to one embodiment, the dispersity may range from about 35 mN/m to about 55 mN/m. In the biodegradable polyester resin composition according to another embodiment, the dispersity may range from about 40 mN/m to about 50 mN/m.

In the biodegradable polyester resin composition according to one embodiment, the polarity may range from about 2 mN/m to about 8 mN/m. In the biodegradable polyester resin composition according to another embodiment, the polarity may range from about 3 mN/m to about 7 mN/m.

The biodegradable polyester resin composition according to one embodiment may have the surface tension, water contact angle, diiodomethane contact angle, surface free energy, dispersity and polarity described above due to the composition including the biodegradable polyester resin, the oligomer, the reinforcing material, the chain extender, the metal salt, the anti-hydrolysis agent, the heat stabilizer and the like and the processes including the esterification, the polycondensation reaction, the chain extension reaction, the heat treatment reaction and the like. Accordingly, the biodegradable polyester resin composition according to one embodiment may have appropriate hydrolysis and appropriate biodegradability.

The above contents are described in more detail through the following examples. However, the following examples are only for illustrating the present disclosure, but the present disclosure is not limited thereto.

<Preparation Example>

Preparation of pretreated cellulose nanocrystals(CNC)

Dry powder-type cellulose nanocrystals (NVC-100, Manufacturer: Celluforce) having a particle diameter of about 1 μm to about 50 μm were dispersed in water at 1 % by weight, and then sonicated at an output of 20000 J/s for 3 minutes using a tip-type ultrasonic disperser, thereby producing pretreated nanocellulose.

Metal salt: Magnesium acetate, potassium acetate
Chain extender: Hexamethylenediisocyanate
Ester polyol: U-1615,UNION CHEMICALS
Polycaprolactone diol (189421, Sigma-Aldrich)
Branching agent: Glycerol, trimellitic anhydride(TMA)

<Example>

Example 1

Preparation of biodegradable polyester resin

First step: Pretreating to obtain slurry

As shown in Table 1, magnesium acetate, a branching agent, ester polyol, pretreated nanocellulose, 1,4-butanediol (1,4-BDO) and terephthalic acid (TPA) were mixed in a molar ratio (1,4-BDO:TPA) of 1.2:1 and fed into a slurry tank (the bottom of the slurry tank was an anchor type, the height to an agitator was 40 mm, and three rotary blades were provided) in a non-catalytic state. Here, D50 of the terephthalic acid (TPA) was 120 μm, and the standard deviation (SD) of D50 of the terephthalic acid (TPA) was 30.

Next, the mixture was pretreated by stirring at 60 °C and 100 rpm for 1 hour, and a slurry was obtained by phase separation.

Second step: Obtaining prepolymer

A mixture (a molar ratio of 1,4-butanediol to terephthalic acid to adipic acid was 1.2:1:0.2) of about 256 parts by weight of the slurry obtained from the first step, 18 parts by weight of the 1,4-butanediol about and about 29.2 parts by weight of adipic acid was fed into a reactor through a supply line, and tetrabutyl titanate (Dupont, Tyzor TnBT product) as a titanium-based catalyst was fed at 250 ppm thereinto, followed by performing a first esterification at 220 °C under normal pressure for about 2 hours until 95% of by-product water was discharged.

A mixture (a molar ratio of 1,4-butanediol to terephthalic acid to adipic acid was 1.064:0.064:1) of about 16.4 parts by weight of a slurry, about 90 parts by weight of 1,4-butanediol (1,4-BDO) and about 146 parts by weight of adipic acid (AA) was added to the reaction product, and tetrabutyl titanate (Dupont, Tyzor TnBT product) as a titanium-based catalyst was added in a content of 200 ppm based on the total weight of the reaction product and the additional mixture. Next, a second esterification was performed for about 2 hours at 210 °C under normal pressure until 95% of the by-products were discharged, thereby producing a prepolymer having a number average molecular weight of 1200 g/mol.

Third step: Polycondensing 5 wt% of an ester polymer, 400 ppm of tetrabutyl titanate (Dupont, Tyzor TnBT product) as a titanium-based catalyst and 500 ppm of a triethylene phosphate stabilizer, based on the total weight of the prepolymer, were added to the prepolymer and stabilized for about 10 minutes. Next, the temperature of the reaction mixture was elevated to 250 °C, and then a polycondensation reaction was carried out at 0.5 Torr for 4 hours, thereby preparing a polymer having a number average molecular weight of 55000 g/mol.

Next, the chain extender was added to the polymer, followed by uniformly mixing and proceeding a chain extension reaction at about 240 °C for about 10 minutes.

Next, the polymer was cooled to 5 °C, and then cut with a pellet cutter, thereby obtaining a biodegradable polyester resin pellet.

Examples 2 to 7 and Comparative Examples 1 and 2

As shown in Tables 1 to 3 below, the contents of the magnesium acetate, the branching agent, the ester polyol, the polyhydric carboxylic acid and the chain extender, the compositions of reactants of the first and second esterifications and process conditions of the first and second esterifications were varied. Except for the contents and the process, other processes were carried out in the substantially same manner as in Example 1.

Examples 8 to 15 and comparative examples

First step: Pretreating to obtain slurry

As shown in Table 4, potassium acetate, glycerol, polycaprolactone diol, pretreated nanocellulose, 1,4-butanediol (1,4-BDO) and terephthalic acid (TPA) were mixed in a molar ratio (1,4-BDO:TPA) of 1.2:1 and fed into a slurry tank (the bottom of the slurry tank was an anchor type, the height to an agitator was 40 mm, and three rotary blades were provided) in a non-catalytic state. Here, D50 of the terephthalic acid (TPA) was 130 μm.

Next, the mixture was pretreated by stirring at 60 °C and 100 rpm for 1 hour, and a slurry was obtained by phase separation.

As shown in Tables 4 to 6, the contents of the potassium acetate, the glycerol, the polycaprolactone diol, the glycerol and the chain extender, the compositions of reactants of the first and second esterifications and process conditions of the first and second esterifications were varied. Except for the contents and the process, other processes were carried out in the substantially same manner as in Example 1.

Manufacture of biodegradable polyester sheet

After preparing two Teflon sheets, a stainless steel (SUS) mold having a dimension of 12 cm × 12 cm was placed on one Teflon sheet, and about 7 g of the prepared polyester resin pellet was put into the stainless steel (SUS) mold having a dimension of 12 cm × 12 cm. Next, the mold was covered with another Teflon sheet, and placed in the center of a hot press (manufacturer: Widlab, model name: WL 1600SA) having a surface size of about 25 cm × 25 cm. The mold was maintained at about 210 °C under a pressure of about 10 MPa for about 3 minutes, and then detached, followed by immediately cooling in water of 20 °C for about 30 seconds. Next, a biodegradable polyester sheet having an area of about 10 cm × 10 cm and a thickness of about 300 μm was manufactured.

Manufacture of biodegradable polyester block

Two Teflon sheets were prepared, and then a stainless steel (SUS) mold having a dimension of 12 cm × 12 cm was placed on one Teflon sheet, and then about 57g of the produced polyester resin pellet was put in the stainless steel (SUS) mold having a dimension of 12 cm × 12 cm and covered with another Teflon™ sheet, and then placed in the center of a hot press (manufacturer: Widlab, model name: WL 1600SA) having a surface size of about 25 cm × 25 cm. This was maintained at about 210 °C under a pressure of about 10 MPa for about 3 minutes, and then detached, followed by immediately cooling in water of 20 °C for about 30 seconds. Next, a biodegradable polyester block having an area of about 10 cm × 10 cm and a thickness of about 2.5 mm was manufactured.

Manufacture of biodegradable polyester film

After drying the biodegradable polyester resin pellet at 80 °C for 5 hours, melt extrusion was carried out at 160 °C using Blown Film Extrusion Line (Manufacturer: YOOJIN ENGINEERING), thereby manufacturing a biodegradable polyester film having a thickness of 50 μm.

[Table 1]

| Classification | Magnesium acetate (parts by weight) | Glycerol (parts by weight) | TMA (parts by weight) | CNC (parts by weight) | Ester polyol (parts by weight) | Chain extender (parts by weight) |
|---|---|---|---|---|---|---|
| Example 1 | 0.5 | 1 | | 0.4 | | |
| Example 2 | | | 1 | | | |
| Example 3 | | | | | 15 | |
| Example 4 | 0.5 | | | | | 20 |
| Example 5 | | 1 | | 0.4 | | |
| Example 6 | 0.5 | | | | | 20 |
| Example 7 | | | 1 | | 15 | 20 |
| Comparative Example 1 | | | | | | |
| Comparative Example 2 | | | | | | |

[Table 2]

| Classification | First reaction, slurry (parts by weight) | First reaction, BDO (parts by weight) | First reaction, AA (parts by weight) | Second reaction, slurry (parts by weight) | Second reaction, BDO (parts by weight) | Second reaction, AA (parts by weight) |
|---|---|---|---|---|---|---|
| Example 1 | 272 | 18 | 29.2 | 17.2 | 90 | 146 |

(continued)

| Classification | First reaction, slurry (parts by weight) | First reaction, BDO (parts by weight) | First reaction, AA (parts by weight) | Second reaction, slurry (parts by weight) | Second reaction, BDO (parts by weight) | Second reaction, AA (parts by weight) |
|---|---|---|---|---|---|---|
| Example 2 | 271 | 18 | 29.2 | 34.5 | 90 | 146 |
| Example 3 | 256 | 27 | 43.8 | 33 | 90 | 146 |
| Example 4 | 256 | 18 | 29.2 | 51.2 | 90 | 146 |
| Example 5 | 271 | 27 | 58.8 | 17.2 | 90 | 146 |
| Example 6 | 256 | 9 | 14.6 | 16.4 | 90 | 146 |
| Example 7 | 266 | 36 | 58.4 | 56.2 | 90 | 146 |
| Comparative Example 1 | 290 | | | | 90 | 146 |
| Comparative Example 2 | 207 | | | | 90 | 146 |

[Table 3]

| Classification | First esterification temperature (°C) | First esterification time (hr) | Second esterification temperature (°C) | Second esterification time (hr) | Pretreatment |
|---|---|---|---|---|---|
| Example 1 | 220 | 2 | 220 | 2 | O |
| Example 2 | 205 | 1.5 | 215 | 2.5 | O |
| Example 3 | 210 | 2.0 | 205 | 2.0 | O |
| Example 4 | 205 | 2.0 | 210 | 2.0 | O |
| Example 5 | 210 | 1.5 | 210 | 2.5 | O |
| Example 6 | 220 | 1.5 | 210 | 2.0 | O |
| Example 7 | 210 | 2.0 | 205 | 2.0 | O |
| Comparative Example 1 | 210 | 2.0 | 205 | 2.0 | X |
| Comparative Example 2 | 210 | 2.0 | 205 | 2.0 | X |

[Table 4]

| Classification | Metal salt (parts by weight) | Glycerol (parts by weight) | CNC (parts by weight) | Polycaprolactone diol (parts by weight) | Chain extender (parts by weight) |
|---|---|---|---|---|---|
| Example 8 | 0.5 | | 0.4 | 15 | 20 |
| Example 9 | | 15 | 0.4 | | |
| Example 10 | | | | 15 | |
| Example 11 | 0.5 | | | | 20 |
| Example 12 | | 15 | 0.4 | | |
| Example 13 | 0.5 | | | | 20 |

(continued)

| Classification | Metal salt (parts by weight) | Glycerol (parts by weight) | CNC (parts by weight) | Polycaprolactone diol (parts by weight) | Chain extender (parts by weight) |
|---|---|---|---|---|---|
| Example 14 | | | | 15 | 20 |
| Example 15 | | | | | |
| Comparative Example 4 | | | | | |

[Table 5]

| Classification | First reaction, slurry (parts by weight) | First reaction, BDO (parts by weight) | First reaction, AA (parts by weight) | Second reaction, slurry (parts by weight) | Second reaction, BDO (parts by weight) | Second reaction, AA (parts by weight) |
|---|---|---|---|---|---|---|
| Example 8 | 290 | 18 | 29.2 | 17.2 | 108 | 146 |
| Example 9 | 289 | 18 | 29.2 | 34.5 | 108 | 146 |
| Example 10 | 274 | 27 | 43.8 | 33 | 108 | 146 |
| Example 11 | 274 | 18 | 29.2 | 51.2 | 108 | 146 |
| Example 12 | 289 | 27 | 58.8 | 17.2 | 108 | 146 |
| Example 13 | 274 | 9 | 14.6 | 16.4 | 108 | 146 |
| Example 14 | 284 | 36 | 58.4 | 56.2 | 108 | 146 |
| Example 15 | 308 | | | | 108 | 146 |
| Comparative Example 4 | 225 | | | | 108 | 146 |

[Table 6]

| Classification | First esterification temperature (°C) | First esterification time (hr) | Second esterification temperature (°C) | Second esterification time (hr) | Pretreatment |
|---|---|---|---|---|---|
| Example 8 | 220 | 2 | 220 | 2 | O |
| Example 9 | 205 | 1.5 | 215 | 2.5 | O |
| Example 10 | 210 | 2.0 | 205 | 2.0 | O |
| Example 11 | 205 | 2.0 | 210 | 2.0 | O |
| Example 12 | 210 | 1.5 | 210 | 2.5 | O |
| Example 13 | 220 | 1.5 | 210 | 2.0 | O |
| Example 14 | 210 | 2.0 | 205 | 2.0 | O |
| Example 15 | 210 | 2.0 | 205 | 2.0 | X |
| Comparative Example 4 | 210 | 2.0 | 205 | 2.0 | X |

<Evaluation examples>

Evaluation Example 1: Average particle diameter (D50) and standard deviation

<Average particle diameter (D50) and standard deviation of aromatic dicarboxylic acid >

With regard to a particle diameter distribution (PSD), the average particle diameter (D50) and standard deviation (SD) of an aromatic dicarboxylic acid (TPA or DMT) were obtained using a particle diameter analyzer Microtrac S3500 (Microtrac Inc) according to the following conditions:

Use environment

- Temperature: 10 to 35 °C, humidity: 90% RH, non-condensing maximum
- D50 and SD, which are average particle diameter distributions for each section, were measured.

The standard deviation means the square root of the variance and may be calculated using software in a processor or computing device.

<Particle diameter of nanocellulose>

The particle diameter and average particle deviation of nanocellulose were measured using the principle of dynamic light scattering (DLS) at 25 °C and a measurement angle of 175° using Zetasizer Nano ZS (Manufacturer: Marven). Here, a peak value derived through the polydispersity index (PdI) in a confidence interval of 0.5 was measured as a particle diameter.

Evaluation Example 2: Hydrolysis degree

The biodegradable polyester resins prepared in the examples and the comparative examples were immersed in 80 °C water (100% RH), and then an accelerated hydrolysis test was carried out.

Specifically, 5 g of each of the polyester resins of the examples and the comparative examples was added to 500 mL of deionized water (DI Water), and then blocked with a stopper to prevent water from evaporating and subjected to an accelerated hydrolysis test in an 80 °C convection (hot air) oven. The humidity environment of the biodegradable polyester sheet is the same as that at 100% RH because it is created by immersion in water.

The number average molecular weights of the polyester resins of the examples and the comparative examples after a certain period were measured using gel permeation chromatography (GPC). A hydrolysis degree was derived by dividing a difference between the initial number average molecular weight and the number average molecular weight after a certain period by the initial number average molecular weight.

Sample pretreatment: 0.035 mg of PBAT chip was dissolved in 1.5 ml of THF
Measurement apparatus: e2695 manufactured by Waters
Flow rate: 1 ml/min in THF
Flow amount: 50 μl Column temperature: 40 °C
Detector: Evaporative Light Scattering Detector (ELSD)
Column: Styragel Column HR 5E, HR4, HR2
Evaluation Example 3: Biodegradability

Each of the biodegradable polyester resins prepared in the examples and the comparative examples was mixed with the following compost, and was subjected to a biodegradation acceleration test at 60 °C and a relative humidity of 90%.

The number average molecular weight of each of the polyester resins of the examples and the comparative examples was measured using the gel permeation chromatography (GPC) after a certain period. Biodegradability was derived by dividing the difference between the initial number average molecular weight and the number average molecular weight after a certain period by the initial number average molecular weight.

Compost

Manufacturer: Taeheung F&G
Product Name: Jisaengto (by-product fertilizer grade 1 compost)
Compost components: 40 wt% of pig manure, 15 wt% of chicken manure, 37 wt% of sawdust, 5 wt% of zeolite, a microbial agent 3 wt%

Evaluation Example 4: Nuclear magnetic resonance spectroscopy

About 5 mg of a sample was prepared from each of the biodegradable polyester resin compositions of the examples and the comparative examples, and the sample was dissolved in the NMR solvent CDCl3. Next, the $^1$H-NMR of the solution was analyzed using a nuclear magnetic resonance (NMR) instrument (company JEOL, JNM-LA3000, 500MHz, 90°pulse) at room temperature. Next, in the obtained NMR data, the peaks of the terephthalic acid, the adipic acid and the 1,4-butanediol were integrated.

Pulse: 90°
Repeat time:4 sec
Number of integrations: 8 measurements
Temperature: Room temperature (RT) (25 °C)
Evaluation Example 5: Shore D hardness

The hardness of the polyester block was measured using a Shore hardness tester (SAUTER® Digital Professional Shore Hardness Tester). Next, the polyester block was cut into a size of about 3 cm×3 cm and immersed for about 0.5 hours, about 1 hour, about 18 hours and about 24 hours in water at about 30 °C, about 50 °C and about 70 °C. Next, the wet hardness of the sample was measured using the Shore hardness tester immediately after removing moisture from the sample.

Evaluation Example 6: Swelling rate

The polyester sheets whose initial weight and initial thickness have been measured were respectively immersed in acetone and acetonitrile at room temperature. After 2 hours, 18 hours and 24 hours, the polyester sheets were taken out of the solvents. Next, the weight and thickness of each of the polyester sheets from which the solvent on the surface thereof was removed were measured. A weight swelling rate and a volume swelling rate were measured based on a change in the weight and thickness of the polyester sheet.

Evaluation Example 7: Water contact angle and polarity

The water contact angle and the polarity were measured on the surfaces of the biodegradable polyester sheets manufactured in the examples and the comparative examples under the following conditions:

Surface tension: Wetting Tension Test Mixture Nos. 40 to 64

Manufacturer: Wako

Component: Ethylene glycol, monoethyl ether

Surface energy meter: MSA One-Click SFE (product name) / KRUSS (manufacturer)

As shown in Tables 7 and 8 below, the biodegradability each of of the biodegradable polyester sheets manufactured in the examples and the comparative examples was derived.

[Table 7]

| Classification | Molecular weight reduction rate (%) after 7 days | Molecular weight reduction rate (%) after 14 days | Molecular weight reduction rate (%) after 21 days | Molecular weight reduction rate (%) after 28 days | Molecular weight reduction rate (%) after 42 days | Molecular weight reduction rate (%) after 63 days |
|---|---|---|---|---|---|---|
| Example 1 | 53 | 61 | 70 | 78 | 87 | 90 |

(continued)

| Classification | Molecular weight reduction rate (%) after 7 days | Molecular weight reduction rate (%) after 14 days | Molecular weight reduction rate (%) after 21 days | Molecular weight reduction rate (%) after 28 days | Molecular weight reduction rate (%) after 42 days | Molecular weight reduction rate (%) after 63 days |
|---|---|---|---|---|---|---|
| Example 2 | 52 | 63 | 71 | 78 | 88 | 90 |
| Example 3 | 57 | 64 | 71 | 78 | 88 | 91 |
| Example 4 | 52 | 60 | 70 | 78 | 87 | 90 |
| Example 5 | 54 | 62 | 71 | 79 | 86 | 90 |
| Example 6 | 55 | 63 | 72 | 79 | 87 | 92 |
| Example 7 | 53 | 62 | 71 | 79 | 87 | 91 |
| Comparative Example 1 | 46 | 52 | 65 | 74 | 82 | 85 |
| Comparative Example 2 | 51 | 57 | 64 | 71 | 75 | 80 |

[Table 8]

| Classification | Molecular weight reduction rate (%) after 7 days | Molecular weight reduction rate (%) after 14 days | Molecular weight reduction rate (%) after 21 days | Molecular weight reduction rate (%) after 28 days | Molecular weight reduction rate (%) after 42 days | Molecular weight reduction rate (%) after 63 days |
|---|---|---|---|---|---|---|
| Example 8 | 53 | 62 | 70 | 78 | 87 | 90 |
| Example 9 | 52 | 62 | 71 | 78 | 88 | 90 |
| Example 10 | 57 | 64 | 71 | 78 | 88 | 91 |
| Example 11 | 52 | 61 | 70 | 78 | 87 | 90 |
| Example 12 | 54 | 62 | 71 | 79 | 86 | 90 |
| Example 13 | 55 | 64 | 72 | 79 | 87 | 92 |
| Example 14 | 52 | 63 | 71 | 79 | 86 | 91 |
| Example 15 | 46 | 52 | 65 | 74 | 82 | 85 |
| Comparative | 51 | 57 | 64 | 71 | 75 | 80 |
| Example 4 | | | | | | |

As shown in Tables 9 and 10, hydrolysis degrees were measured.

[Table 9]

| Classification | Molecular weight reduction rate (%) after 7 days | Molecular weight reduction rate (%) after 14 days | Molecular weight reduction rate (%) after 21 days | Molecular weight reduction rate (%) after 28 days | Molecular weight reduction rate (%) after 42 days | Molecular weight reduction rate (%) after 63 days |
|---|---|---|---|---|---|---|
| Example 1 | 47 | 87 | 94 | 95 | 97 | 97 |
| Example 2 | 52 | 89 | 94 | 96 | 97 | 97 |
| Example 3 | 57 | 87 | 94 | 96 | 97 | 97 |

(continued)

| Classification | Molecular weight reduction rate (%) after 7 days | Molecular weight reduction rate (%) after 14 days | Molecular weight reduction rate (%) after 21 days | Molecular weight reduction rate (%) after 28 days | Molecular weight reduction rate (%) after 42 days | Molecular weight reduction rate (%) after 63 days |
|---|---|---|---|---|---|---|
| Example 4 | 47 | 87 | 94 | 95 | 96 | 97 |
| Example 5 | 51 | 88 | 94 | 96 | 97 | 97 |
| Example 6 | 58 | 89 | 94 | 96 | 97 | 97 |
| Example 7 | 49 | 88 | 94 | 96 | 97 | 97 |
| Comparative Example 1 | 45 | 86 | 93 | 95 | 96 | 96 |
| Comparative Example 2 | 62 | 90 | 95 | 97 | 97 | 97 |

[Table 10]

| Classification | Molecular weight reduction rate (%) after 7 days | Molecular weight reduction rate (%) after 14 days | Molecular weight reduction rate (%) after 21 days | Molecular weight reduction rate (%) after 28 days | Molecular weight reduction rate (%) after 42 days | Molecular weight reduction rate (%) after 63 days |
|---|---|---|---|---|---|---|
| Example 8 | 48 | 87 | 94 | 95 | 97 | 97 |
| Example 9 | 51 | 89 | 94 | 96 | 97 | 97 |
| Example 10 | 56 | 87 | 94 | 96 | 97 | 97 |
| Example 11 | 48 | 87 | 94 | 95 | 96 | 97 |
| Example 12 | 51 | 88 | 94 | 96 | 97 | 97 |
| Example 13 | 58 | 89 | 94 | 96 | 97 | 97 |
| Example 14 | 49 | 88 | 94 | 96 | 97 | 97 |
| Example 15 | 45 | 86 | 93 | 95 | 96 | 96 |
| Comparative Example 4 | 62 | 90 | 95 | 97 | 97 | 97 |

As shown in Tables 11 and 12 below, peaks by $^{1}$H-NMR and the areas of the peaks were measured.

[Table 11]

| Classification | 8.085 ppm | 4.423 ppm | 4.366 ppm | 4.148 ppm | 4.078 ppm | 2.324 ppm | 1.963 ppm | 1.84 ppm | 1.806 ppm | 1.681 ppm | 1.648 ppm |
|---|---|---|---|---|---|---|---|---|---|---|---|
| Example 1 | 1 | 0.46 | 0.51 | 0.51 | 0.54 | 1.04 | 0.45 | 0.51 | 0.55 | 0.54 | 1.06 |
| Example 2 | 1 | 0.47 | 0.53 | 0.52 | 0.56 | 1.07 | 0.48 | 0.53 | 0.55 | 0.57 | 1.05 |
| Example 3 | 1 | 0.48 | 0.51 | 0.51 | 0.54 | 1.06 | 0.48 | 0.51 | 0.50 | 0.54 | 1.10 |
| Example 4 | 1 | 0.46 | 0.52 | 0.52 | 0.54 | 1.11 | 0.47 | 0.52 | 0.49 | 0.54 | 1.08 |
| Example 5 | 1 | 0.47 | 0.52 | 0.52 | 0.57 | 1.10 | 0.46 | 0.54 | 0.56 | 0.57 | 1.07 |
| Example 6 | 1 | 0.46 | 0.51 | 0.52 | 0.56 | 1.06 | 0.47 | 0.52 | 0.50 | 0.54 | 1.10 |
| Example 7 | 1 | 0.45 | 0.52 | 0.52 | 0.57 | 1.08 | 0.45 | 0.53 | 0.55 | 0.56 | 1.09 |
| Comparative Example 1 | 1 | 0.75 | 0.31 | 0.32 | 0.38 | 0.72 | 0.74 | 0.32 | 0.31 | 0.38 | 0.73 |
| Comparative Example 2 | 1 | 0.25 | 0.67 | 0.66 | 0.63 | 1.34 | 0.36 | 0.68 | 0.67 | 0.63 | 1.35 |

[Table 12]

| Classification | 8.075 ppm | 4.415 ppm | 4.358 ppm | 4.127 ppm | 4.070 ppm | 2.309 ppm | 1.955 ppm | 1.832 ppm | 1.783 ppm | 1.673 ppm | 1.640 ppm |
|---|---|---|---|---|---|---|---|---|---|---|---|
| Example 8 | 1 | 0.46 | 0.51 | 0.51 | 0.54 | 1.04 | 0.45 | 0.51 | 0.55 | 0.54 | 1.06 |
| Example 9 | 1 | 0.47 | 0.53 | 0.52 | 0.56 | 1.07 | 0.48 | 0.53 | 0.55 | 0.57 | 1.05 |
| Example 10 | 1 | 0.48 | 0.52 | 0.21 | 0.54 | 1.06 | 0.48 | 0.51 | 0.50 | 0.54 | 1.10 |
| Example 11 | 1 | 0.46 | 0.52 | 0.52 | 0.54 | 1.10 | 0.47 | 0.52 | 0.49 | 0.54 | 1.08 |
| Example 12 | 1 | 0.47 | 0.52 | 0.52 | 0.57 | 1.10 | 0.46 | 0.54 | 0.56 | 0.57 | 1.08 |
| Example 13 | 1 | 0.46 | 0.51 | 0.51 | 0.56 | 1.06 | 0.47 | 0.52 | 0.50 | 0.54 | 1.10 |
| Example 14 | 1 | 0.45 | 0.52 | 0.52 | 0.56 | 1.08 | 0.45 | 0.53 | 0.55 | 0.56 | 1.09 |
| Example 15 | 1 | 0.75 | 0.31 | 0.32 | 0.38 | 0.72 | 0.74 | 0.32 | 0.31 | 0.38 | 0.73 |
| Comparative Example 4 | 1 | 0.25 | 0.67 | 0.66 | 0.63 | 1.34 | 0.36 | 0.68 | 0.67 | 0.63 | 1.35 |

As shown in Tables 13 to 15 below, an initial hardness and a wet hardness for each temperature and each immersion time were measured.

[Table 13]

| Classification | Initial hardness (Shore D) | 30 °C 0.5 hours wet hardness (Shore D) | 30 °C 1 hour wet hardness (Shore D) | 30 °C 18 hours wet hardness (Shore D) | 30 °C 24 hours wet hardness (Shore D) |
|---|---|---|---|---|---|
| Example 1 | 38.1 | 32.6 | 32.8 | 32.9 | 32.8 |
| Example 2 | 39 | 32.2 | 32.3 | 33.4 | 31.3 |
| Example 3 | 37.7 | 32.5 | 31.4 | 31.5 | 31.1 |
| Example 4 | 37.8 | 31.3 | 31.1 | 31.3 | 30.5 |
| Example 5 | 37.9 | 31.3 | 32.1 | 31.8 | 31.5 |
| Example 6 | 38.8 | 33.1 | 32.6 | 32.4 | 32.5 |
| Example 7 | 37.8 | 31.5 | 33.5 | 33.1 | 33.2 |
| Comparative Example 1 | 40.3 | 38.2 | 38.3 | 38.4 | 37.9 |
| Comparative Example 2 | 37.3 | 27.3 | 27.1 | 27.0 | 27.2 |

[Table 14]

| Classification | Initial hardness (Shore D) | 50 °C 0.5 hours wet hardness (Shore D) | 50 °C 1 hour wet hardness (Shore D) | 50 °C 18 hours wet hardness (Shore D) | 50 °C 24 hours wet hardness (Shore D) |
|---|---|---|---|---|---|
| Example 1 | 38.1 | 32.5 | 32.5 | 32.1 | 32.2 |
| Example 2 | 39 | 32.3 | 32.1 | 32.5 | 31.2 |
| Example 3 | 38.3 | 32.6 | 32.7 | 33.3 | 32.6 |
| Example 4 | 37.8 | 31.4 | 31.2 | 31.5 | 30.8 |
| Example 5 | 38.7 | 32.2 | 32.1 | 32.0 | 32.0 |
| Example 6 | 38.8 | 33.0 | 32.7 | 32.6 | 32.4 |
| Example 7 | 39.1 | 33.7 | 33.7 | 33.0 | 33.0 |
| Comparative Example 1 | 40.3 | 38.1 | 38.0 | 37.8 | 37.7 |
| Comparative Example 2 | 38.3 | 27.2 | 27.1 | 270 | 271 |

[Table 15]

| Classification | Initial hardness (Shore D) | 70 °C 0.5 hours wet hardness (Shore D) | 70 °C 1 hour wet hardness (Shore D) | 70 °C 18 hours wet hardness (Shore D) | 70 °C 24 hours wet hardness (Shore D) |
|---|---|---|---|---|---|
| Example 1 | 38.1 | 32.4 | 32.5 | 32.4 | 32.3 |
| Example 2 | 39 | 32.1 | 32.1 | 32.4 | 31.9 |
| Example 3 | 38.3 | 32.4 | 32.76 | 32.3 | 32.7 |
| Example 4 | 37.8 | 31.5 | 31.1 | 30.9 | 30.9 |

(continued)

| Classification | Initial hardness (Shore D) | 70 °C 0.5 hours wet hardness (Shore D) | 70 °C 1 hour wet hardness (Shore D) | 70 °C 18 hours wet hardness (Shore D) | 70 °C 24 hours wet hardness (Shore D) |
|---|---|---|---|---|---|
| Example 5 | 38.7 | 32.6 | 32.2 | 32.8 | 31.5 |
| Example 6 | 38.8 | 31.7 | 31.3 | 31.5 | 30.8 |
| Example 7 | 39.1 | 33.7 | 33.6 | 33.1 | 33.1 |
| Comparative Example 1 | 40.3 | 38.0 | 38.0 | 37.9 | 37.9 |
| Comparative Example 2 | 38.3 | 271 | 270 | 26.9 | 26.9 |

As shown in Tables 16 to 19 below, a weight swelling rate and volume swelling rate for each solvent and each immersion time were measured.

[Table 16]

| Classification | 2 hours acetone weight swelling rate (%) | 18 hours acetone weight swelling rate (%) | 24 hours acetone weight swelling rate (%) |
|---|---|---|---|
| Example 8 | 4.92 | 5.35 | 5.69 |
| Example 9 | 4.83 | 5.25 | 5.59 |
| Example 10 | 4.93 | 5.34 | 5.70 |
| Example 11 | 4.85 | 5.29 | 5.70 |
| Example 12 | 4.88 | 5.39 | 5.65 |
| Example 13 | 4.75 | 5.33 | 5.65 |
| Example 14 | 4.96 | 5.43 | 5.85 |
| Example 15 | 2.06 | 3.52 | 4.28 |
| Comparative Example 4 | 32.16 | 31.67 | 34.01 |

[Table 17]

| Classification | 2 hours acetonitrile weight swelling rate (%) | 18 hours acetonitrile weight swelling rate (%) | 24 hours acetonitrile weight swelling rate (%) |
|---|---|---|---|
| Example 8 | 8.59 | 9.13 | 9.66 |
| Example 9 | 8.35 | 9.26 | 9.75 |
| Example 10 | 8.55 | 9.15 | 9.70 |
| Example 11 | 8.65 | 9.22 | 9.75 |
| Example 12 | 8.33 | 9.23 | 9.77 |
| Example 13 | 8.45 | 9.29 | 9.63 |
| Example 14 | 8.53 | 9.18 | 9.67 |
| Example 15 | 4.36 | 5.26 | 6.35 |
| Comparative Example 4 | 23.44 | 21.58 | 20.31 |

[Table 18]

| Classification | 2 hours acetone volume swelling rate (%) | 18 hours acetone volume swelling rate (%) | 24 hours acetone volume swelling rate (%) |
|---|---|---|---|
| Example 8 | 14.24 | 14.84 | 15.27 |
| Example 9 | 14.35 | 14.95 | 15.31 |
| Example 10 | 14.11 | 14.65 | 15.02 |
| Example 11 | 13.98 | 14.56 | 15.16 |
| Example 12 | 14.21 | 14.35 | 15.03 |
| Example 13 | 14.31 | 14.96 | 15.35 |
| Example 14 | 14.25 | 14.89 | 15.29 |
| Example 15 | 10.56 | 11.35 | 11.56 |
| Comparative Example 4 | 51.50 | 43.01 | 48.29 |

[Table 19]

| Classification | 2 hours acetonitrile volume swelling rate (%) | 18 hours acetonitrile volume swelling rate (%) | 24 hours acetonitrile volume swelling rate (%) |
|---|---|---|---|
| Example 8 | 16.64 | 17.8 | 17.61 |
| Example 9 | 16.56 | 17.68 | 17.69 |
| Example 10 | 16.28 | 17.56 | 17.66 |
| Example 11 | 16.18 | 17.48 | 17.58 |
| Example 12 | 16.49 | 17.89 | 17.97 |
| Example 13 | 16.66 | 17.95 | 17.95 |
| Example 14 | 16.58 | 17.85 | 17.87 |
| Example 15 | 9.05 | 11.34 | 12.52 |
| Comparative Example 4 | 34.21 | 30.82 | 28.03 |

As shown in Tables 20 and 21 below, the surface properties of the biodegradable resin compositions according to the examples were derived.

[Table 20]

| Classification | Surface tension (dyne) | Water contact angle (°) | Diiodomethane contact angle (°) | Surface free energy (mN/m) | Dispersity (mN/m) | Polarity (mN/m) |
|---|---|---|---|---|---|---|
| Example 8 | 42 | 74.71 | 33.15 | 47.54 | 42.87 | 4.67 |
| Example 9 | 42 | 71.15 | 25.44 | 51.33 | 45.99 | 5.33 |
| Example 10 | 41 | 72.16 | 26.66 | 50.3 | 44.6 | 5.34 |
| Example 11 | 42 | 73.46 | 27.3 | 51.2 | 43.5 | 5.63 |
| Example 12 | 41 | 70.59 | 24.33 | 51.1 | 44.6 | 5.27 |
| Example 13 | 40 | 74.15 | 30.8 | 49.5 | 42.1 | 5.39 |
| Example 14 | 41 | 73.5 | 25.8 | 50.5 | 43.5 | 5.26 |

(continued)

| Classification | Surface tension (dyne) | Water contactangle (°) | Diiodomethane contact angle (°) | Surface free energy (mN/m) | Dispersity (mN/m) | Polarity (mN/m) |
|---|---|---|---|---|---|---|
| Example 15 | 39 | 91.5 | 41.5 | 45.3 | 40.3 | 4.31 |
| Comparative Example 4 | 38 | 69.5 | 22.3 | 55.3 | 49.5 | 6.18 |

[Table 21]

| Classification | Surface tension (dyne) | Water contactangle (°) | Diiodomethane contact angle (°) | Surface free energy (mN/m) | Dispersity (mN/m) | Polarity (mN/m) |
|---|---|---|---|---|---|---|
| Example 8 | 42 | 74.71 | 33.15 | 47.54 | 42.87 | 4.67 |
| Example 9 | 42 | 71.15 | 25.44 | 51.33 | 45.99 | 5.33 |
| Example 10 | 41 | 72.16 | 26.66 | 50.3 | 44.6 | 5.34 |
| Example 11 | 42 | 73.46 | 27.3 | 51.2 | 43.5 | 5.63 |
| Example 12 | 41 | 70.59 | 24.33 | 51.1 | 44.6 | 5.27 |
| Example 13 | 40 | 74.15 | 30.8 | 49.5 | 42.1 | 5.39 |
| Example 14 | 42 | 75.1 | 25.7 | 50.5 | 43.4 | 5.27 |
| Example 15 | 39 | 91.5 | 41.5 | 45.3 | 40.3 | 4.31 |
| Comparative Example 4 | 38 | 69.5 | 22.3 | 55.3 | 49.5 | 6.18 |

As shown in Tables 7 to 21, the biodegradable resin compositions according to the examples may have an adequate initial hydrolysis degree and a high later hydrolysis degree. That is, the biodegradable resin compositions according to these examples may have a high final hydrolysis degree while having a low initial hydrolysis degree.

In addition, as shown in Tables 7 to 21, it can be confirmed that the biodegradable resin compositions according to these examples have an appropriate wet hardness change rate and appropriate surface properties.

In addition, as shown in Tables 7 to 21, it can be confirmed that the biodegradable resin compositions according to these examples have an appropriately low weight swelling rate and volume swelling rate and appropriate surface properties.

A biodegradable molded article, biodegradable polyester resin composition and biodegradable film according to the disclosed embodiments have an appropriate wet hardness reduction rate. Accordingly, the biodegradable molded article, biodegradable polyester resin composition and biodegradable film according to the disclosed embodiments can appropriately retain moisture in a high-humidity environment or in water such as the sea when discarded. Accordingly, the biodegradable molded article, biodegradable polyester resin composition and biodegradable film according to the disclosed embodiments can be degraded in a high-humidity environment, especially in water.

In addition, the biodegradable molded article, biodegradable polyester resin composition and biodegradable film according to the disclosed embodiments can have appropriate initial hydrolysis resistance while having an appropriate wet hardness reduction rate. Accordingly, the biodegradable molded article, biodegradable polyester resin composition and biodegradable film according to the disclosed embodiments can be biodegraded when discarded after use while maintaining appropriate mechanical and chemical properties during the period of use.

Since the biodegradable molded article, biodegradable polyester resin composition and biodegradable film according to the disclosed embodiments have an appropriate wet hardness reduction rate, they can be easily biodegraded in soil environments with high humidity. In addition, the biodegradable molded article, biodegradable polyester resin composition and biodegradable film according to the disclosed embodiments can be biodegraded even underwater. In particular, when the biodegradable molded article, biodegradable polyester resin composition and biodegradable film according to the disclosed embodiments are discarded in water such as the ocean, moisture and inorganic ions can penetrate into the biodegradable polyester resin composition according to one embodiment. Accordingly, the biodegradable molded article, biodegradable polyester resin composition and biodegradable film according to the disclosed embodiments can be biodegraded even underwater in the sea, lakes and rivers.

In addition, the biodegradable molded article, biodegradable polyester resin composition and biodegradable polyester film according to the disclosed embodiments have an appropriately low weight swelling rate and volume swelling rate in an organic solvent. The biodegradable molded article, biodegradable polyester resin composition and biodegradable polyester film according to the disclosed embodiments can have a low swelling rate in an organic solvent such as acetone or acetonitrile.

Accordingly, the biodegradable molded article, biodegradable polyester resin composition and biodegradable polyester film according to the disclosed embodiments can have high solvent resistance. Therefore, even when exposed to an organic solvent or the like, improved mechanical properties can be maintained.

In addition, the biodegradable molded article, biodegradable polyester resin composition and biodegradable polyester film according to the disclosed embodiments can have appropriate initial hydrolysis resistance while having an appropriately low swelling rate. Accordingly, the biodegradable molded article, biodegradable polyester resin composition and biodegradable polyester film according to the disclosed embodiments can be biodegraded when discarded after use while maintaining appropriate mechanical and chemical properties during the period of use.

In addition, the biodegradable molded article, biodegradable polyester resin composition and biodegradable polyester film according to the disclosed embodiments can have a high biodegradability degree. Accordingly, the biodegradable molded article, biodegradable polyester resin composition and biodegradable polyester film according to the disclosed embodiments can be biodegraded when discarded while having high solvent resistance and high hydrolysis resistance.

Although theembodiments of the present disclosure have been disclosed for illustrative purposes, those skilled in the art will appreciate that various modifications, additions and substitutions are possible, without departing from the scope of the disclosure.

[Description of Symbols]

slurry stirrer 100
esterification part 200
polycondensation reaction part 300
post-treatment part 400
first recovery part 510
second recovery part 520

## Claims

**1.** A biodegradable polyester resin composition, comprising: a polyester resin comprising a diol, an aromatic dicarboxylic acid and an aliphatic dicarboxylic acid,

wherein a wet hardness reduction rate ranges from 12% to 25%,
the wet hardness reduction rate is measured by the measurement method below:
in the measurement method, the biodegradable polyester resin composition is dried at 80 °C, placed in a stainless steel mold, and compressed at 210 °C under a pressure of 10 MPa for 3 minutes to manufacture a polyester block having a thickness of 2.5 mm, an initial hardness of the polyester block and a wet hardness of the polyester block after immersing in 30 °C water for 1 hour are measured, and the wet hardness reduction rate is obtained by dividing a difference between the initial hardness and the wet hardness by the initial hardness.

**2.** The biodegradable polyester resin composition according to claim 1, wherein the initial hardness has a Shore D hardness ranging from 30 to 45, and
the wet hardness has a Shore D hardness ranging from 25 to 40.

**3.** The biodegradable polyester resin composition according to claim 1, wherein the wet hardness reduction rate ranges from 13% to 22%.

**4.** The biodegradable polyester resin composition according to claim 1, wherein a content of nitrogen ranges from 0.1 ppm to 100 ppm based on a total weight of the composition.

**5.** The biodegradable polyester resin composition according to claim 1, wherein a water contact angle of a surface of the polyester block ranges from 65° to 90°.

**6.** The biodegradable polyester resin composition according to claim 5, wherein a polarity of the surface of the polyester block ranges from 4 mN/m to 7 mN/m.

**7.** The biodegradable polyester resin composition according to claim 1, wherein, in the polyester resin, a first ratio of a diol quantity, bonded between the aromatic dicarboxylic acid and the aliphatic dicarboxylic acid, to a total quantity of diols in the polyester resin ranges from 0.3 to 0.7.

**8.** The biodegradable polyester resin composition according to claim 7, wherein a second ratio of a different diol quantity, bonded between onearomatic dicarboxylic acid and another aromatic dicarboxylic acid, to the total quantity of the diols in the polyester resin ranges from 0.2 to 0.3.

**9.** The biodegradable polyester resin composition according to claim 1, wherein a hydrolysis degree after one week is 35% to 60%, and

a hydrolysis degree after three weeks is 85% or more,
wherein the hydrolysis degree after one week and the hydrolysis degree after three weeks are measured by the measurement method below:

in the measurement method, the hydrolysis degree after one week is a molecular weight reduction rate, compared to an initial hydrolysis degree, of the biodegradable polyester resin allowed to stand for one week under high-temperature and high-humidity conditions of 80 °C and 100% relative humidity, and
the hydrolysis degree after three weeks is a molecular weight reduction rate, compared to an initial hydrolysis degree, of the biodegradable polyester resin allowed to stand for three weeks under high-temperature and high-humidity conditions of 80 °C and 100% relative humidity.

**10.** The biodegradable polyester resin composition according to claim 1, wherein a difference between the wet hardness after being immersed in 30 °C water for 1 hour and a wet hardness after being immersed in 30 °C water for 20 hours is 10% or less based on the initial hardness.

**11.** The biodegradable polyester resin composition according to claim 1, wherein a difference between the wet hardness after being immersed in 30 °C water for 1 hour and a wet hardness after being immersed in 70 °C water for 1 hour is 10% or less based on the initial hardness.

Fig. 1

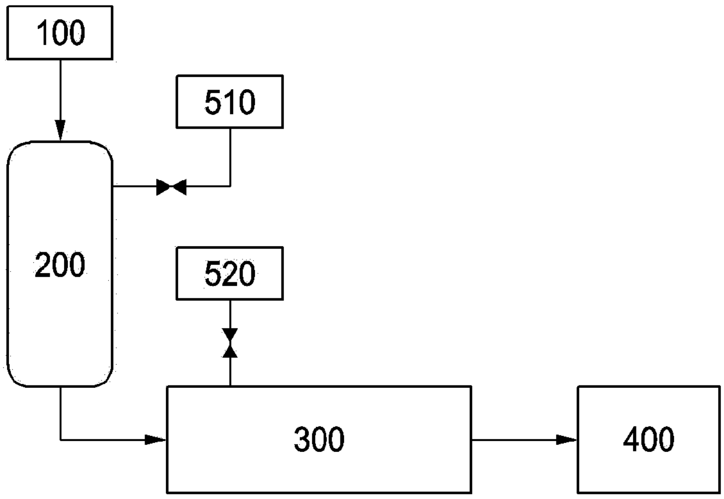


Fig. 2

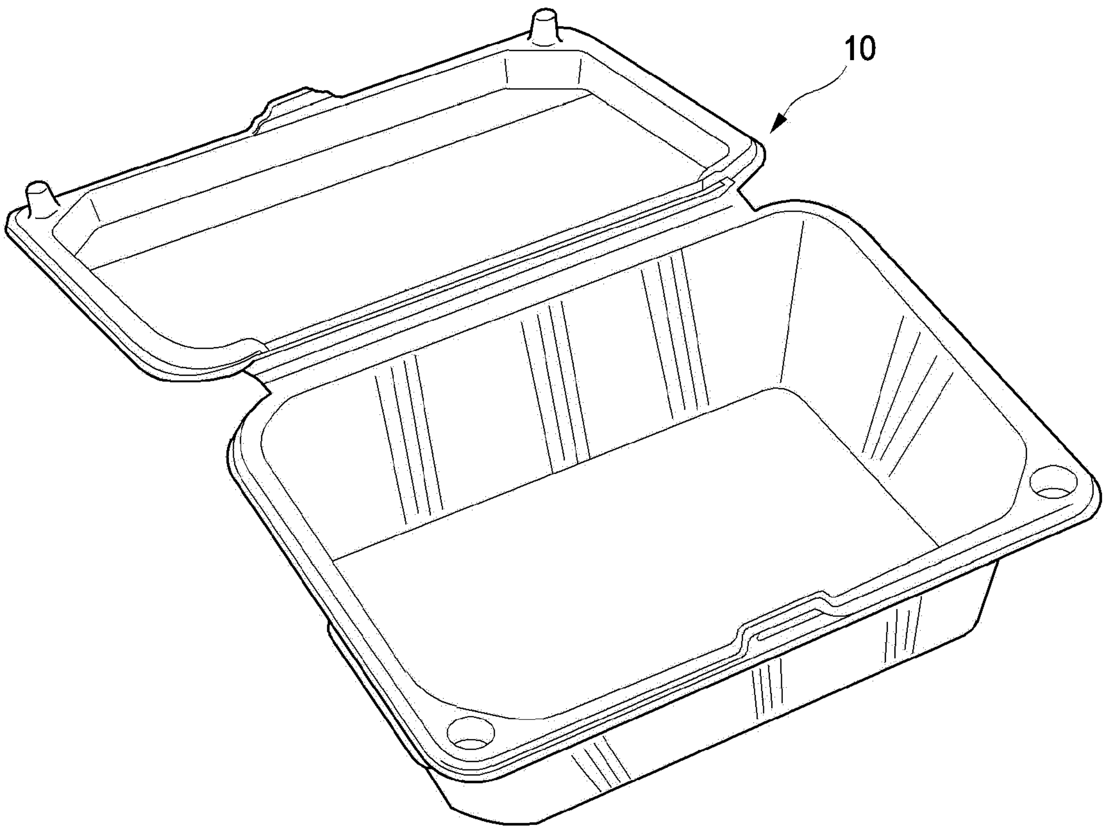

European Patent Office / Europäisches Patentamt / Office européen des brevets

# EUROPEAN SEARCH REPORT

Application Number
EP 23 17 4263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/380757 A1 (KIM KYUNG YOUN [KR] ET AL) 9 December 2021 (2021-12-09)<br>* paragraphs [0009], [0018], [0241], [0295] * | 1-11 | INV.<br>C08G63/183 |
| X | WO 2021/241712 A1 (MITSUBISHI CHEM CORP [JP]) 2 December 2021 (2021-12-02)<br>* paragraph [0021]; claims 3,8 * | 1-11 | |
| X | WO 2021/131181 A1 (MITSUBISHI CHEM CORP [JP]) 1 July 2021 (2021-07-01)<br>* paragraphs [0001], [0002], [0110] * | 1-11 | |
| A | PIOTR RYCHTER ET AL: "Study of Aliphatic-Aromatic Copolyester Degradation in Sandy Soil and Its Ecotoxicological Impact",<br>BIOMACROMOLECULES,<br>vol. 11, no. 4, 12 April 2010 (2010-04-12), pages 839-847, XP055619952,<br>US<br>ISSN: 1525-7797, DOI: 10.1021/bm901331t<br>* table 1 * | 7,8 | TECHNICAL FIELDS SEARCHED (IPC)<br>C08G |
| X | MUTHURAJ RAJENDRAN ET AL: "Hydrolytic degradation of biodegradable polyesters under simulated environmental conditions",<br>JOURNAL OF APPLIED POLYMER SCIENCE,<br>vol. 132, no. 27,<br>10 April 2015 (2015-04-10), pages n/a-n/a, XP093067311,<br>US<br>ISSN: 0021-8995, DOI: 10.1002/app.42189<br>* the whole document * | 1-11 | |

The present search report has been drawn up for all claims

2

| Place of search | Date of completion of the search | Examiner |
|---|---|---|
| The Hague | 25 July 2023 | Hoffmann, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 17 4263

This annex lists the patent family members relating to the patent documents cited in the above-mentioned European search report. The members are as contained in the European Patent Office EDP file on
The European Patent Office is in no way liable for these particulars which are merely given for the purpose of information.

25-07-2023

| Patent document cited in search report | Publication date | Patent family member(s) | Publication date |
|---|---|---|---|
| US 2021380757 A1 | 09-12-2021 | CN 113736069 A | 03-12-2021 |
| | | EP 3916036 A1 | 01-12-2021 |
| | | JP 7282124 B2 | 26-05-2023 |
| | | JP 2021188038 A | 13-12-2021 |
| | | US 2021380757 A1 | 09-12-2021 |
| | | WO 2021241931 A1 | 02-12-2021 |
| WO 2021241712 A1 | 02-12-2021 | CN 115698175 A | 03-02-2023 |
| | | EP 4159811 A1 | 05-04-2023 |
| | | JP WO2021241712 A1 | 02-12-2021 |
| | | US 2023108915 A1 | 06-04-2023 |
| | | WO 2021241712 A1 | 02-12-2021 |
| WO 2021131181 A1 | 01-07-2021 | CN 114514289 A | 17-05-2022 |
| | | EP 4083130 A1 | 02-11-2022 |
| | | JP WO2021131181 A1 | 01-07-2021 |
| | | US 2022282069 A1 | 08-09-2022 |
| | | WO 2021131181 A1 | 01-07-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20120103158